# EUROPEAN PATENT APPLICATION

(11) **EP 4 742 762 A1**
(43) Date of publication of application: **13.05.2026**
(21) Application number: 23944575.2
(22) Date of filing: 07.07.2023
(51) Int. Cl.: H04W 48/16

(54) **COMMUNICATION METHOD AND APPARATUS, COMMUNICATION DEVICE, CHIP, AND COMPUTER STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Grassi, Stefano
(86) International application number: PCT/CN2023/106415
(87) International publication number: WO 2025/010552

(57) **Abstract**

Provided in the embodiments of the present application are a communication method and apparatus, a terminal, and a network device. The method comprises: a first terminal receiving first information, wherein the first information is used for indicating communication with a first node in a first communication mode.

## Description

### TECHNICAL FIELD

Embodiments of the present disclosure relate to the technical field of mobile communications, and particularly to a communication method and apparatus, a communication device, a chip and a computer storage medium.

### BACKGROUND

In practical applications, a complex access process is required to be performed before a terminal communicates with a network node. However, there is a great challenge for a low-cost and low-power terminal to implement the conventional access process due to its limited energy.

### SUMMARY

The embodiments of the present disclosure provide a communication method and apparatus, a communication device, a chip and a computer storage medium.

There is provided a communication method in an embodiment of the present disclosure, and the communication method includes the following operation.

A first terminal receives first information, where the first information is used to indicate communicating with a first node in a first communication manner.

There is provided a communication method in another embodiment of the present disclosure, and the communication method includes the following operation.

A first node transmits first information, where the first information is used to indicate communicating with the first node in a first communication manner.

There is provided a communication apparatus in an embodiment of the present disclosure. The communication apparatus is applied to a terminal and includes a receiving unit.

The receiving unit is configured to receive first information, where the first information is used to indicate communicating with a first node in a first communication manner.

There is provided a communication apparatus in another embodiment of the present disclosure. The communication apparatus is applied to a first node and includes a transmission unit.

The transmission unit is configured to transmit first information, where the first information is used to indicate communicating with the first node in a first communication manner.

There is provided a communication device in an embodiment of the present disclosure. The communication device may be the first terminal or the first node in aforementioned technical solutions and includes a processor and a memory. The memory is configured to store a computer program, and the processor is configured to call and run the computer program stored in the memory to perform each of the above communication methods.

There is provided a chip in an embodiment of the present disclosure, and the chip is configured to perform each of the above communication methods.

Specifically, the chip includes a processor, and the processor is configured to call and run a computer program stored in a memory, to cause a device installed with the chip to perform each of the above communication methods.

There is provided a computer-readable storage medium in an embodiment of the present disclosure, and the computer-readable storage medium is configured to store a computer program. The computer program causes a computer to perform each of the above communication methods.

There is provided a computer program product in an embodiment of the present disclosure, and the computer program product includes computer program instructions. The computer program instructions cause a computer to perform each of the above communication methods.

There is provided a computer program in an embodiment of the present disclosure. The computer program, when running on a computer, causes the computer to perform each of the above communication methods.

In the communication method according to the embodiments of the present disclosure, under the indication of the first information, the terminal can communicate with the first node in the special first communication manner, to realize the communication with the first node.

### BRIEF DESCRIPTION OF THE DRAWINGS

The accompanying drawings illustrated herein are used to provide further understanding of the present disclosure and constitute a part of the present disclosure. The exemplary embodiments of the present disclosure and description thereof are intended to be illustrative of the present disclosure and do not to constitute an undue limitation of the present disclosure. In the drawings:
FIGS. 1A and 1B are schematic diagrams of communication architecture according to an embodiment of the present disclosure.
FIG. 2A is a schematic flowchart of a terminal accessing a network node through active scanning according to an embodiment of the present disclosure.
FIG. 2B is a schematic flowchart of a terminal accessing a network node through passive scanning according to an embodiment of the present disclosure.
FIG. 3 is a first schematic flowchart of a communication method according to an embodiment of the present disclosure.
FIGS. 4A and 4B are schematic diagrams of a first scenario of a communication method according to an embodiment of the present disclosure.
FIG. 5 is a second schematic flowchart of a communication method according to an embodiment of the present disclosure.
FIG. 6 is a schematic diagram of channel partitioning according to an embodiment of the present disclosure.
FIG. 7 is a third schematic flowchart of a communication method according to an embodiment of the present disclosure.
FIG. 8 is a fourth schematic flowchart of a communication method according to an embodiment of the present disclosure.
FIG. 9 is a fifth schematic flowchart of a communication method according to an embodiment of the present disclosure.
FIG. 10 is a schematic diagram of a second scenario of a communication method according to an embodiment of the present disclosure.
FIG. 11 is a schematic diagram of a third scenario of a communication method according to an embodiment of the present disclosure.
FIG. 12 is a schematic diagram of a fourth scenario of a communication method according to an embodiment of the present disclosure.
FIG. 13 is a schematic diagram of a structural composition of a communication apparatus 1300 according to an embodiment of the present disclosure.
FIG. 14 is a schematic diagram of a structural composition of a communication apparatus 1400 according to an embodiment of the present disclosure.
FIG. 15 is a schematic structural diagram of a communication device according to an embodiment of the present disclosure.
FIG. 16 is a schematic structural diagram of a chip according to an embodiment of the present disclosure.
FIG. 17 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure rather than all of the embodiments. All other embodiments acquired by those skilled in the art based on the embodiments of the present disclosure without creative work shall fall within the scope of protection of the present disclosure.

The technical solutions in the embodiments of the present disclosure may be applied to various communication systems, such as a long term evolution (LTE) system, an LTE time division duplex (TDD) system, a universal mobile telecommunication system (UMTS), an Internet of things (IoT) system, a narrow band Internet of things (NB-IoT) system, an enhanced machine-type communications (eMTC) system, a 5th generation (5G) communication system (also called a new radio (NR) communication system), a wireless local area network (WLAN), a wireless fidelity (WiFi) or other communication systems, etc. The frequency bands supported by the WLAN may include, but are not limited to, low frequency bands (2.4 GHz, 5 GHz, 6 GHz), and high frequency bands (60 GHz).

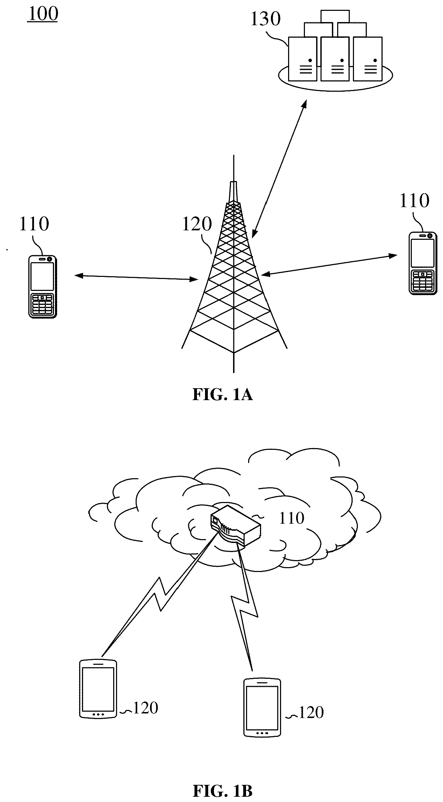

FIG. 1A is an example of architecture of a communication system in which an embodiment of the present disclosure is applied.

As illustrated in FIG. 1A, the communication system 100 may include a terminal 110 and a network device 120. The network device 120 may communicate with the terminal 110 via an air interface. Multi-service transmission is supported between the terminal 110 and the network device 120.

It should be understood that the embodiments of the present disclosure are illustrated with reference to the communication system 100 as an example, but the embodiments of the present disclosure are not limited thereto.

In the communication system 100 illustrated in FIG. 1, the network device 120 may be an access network device that communicates with the terminal 110. The access network device may provide communication coverage range to a specific geographic area, and may communicate with the terminal(s) 110 (such as user equipment (UE)) within the coverage range.

The network device 120 may be an evolutional node B (eNB or eNodeB) in an LTE system, or a next generation radio access network (NG RAN) device, or a base station (gNB) in an NR system, or a wireless controller in a cloud radio access network (CRAN). Alternatively, the network device 120 may be a relay station, an access point, an on-board device, a wearable device, a hub, a switch, a bridge, a router, a network device in a future evolved public land mobile network (PLMN) or the like.

The terminal 110 may be any terminal, which includes, but not limited to, the terminal that is connected to the network device 120, or other terminal(s) via a wired or wireless connection.

For example, the terminal 110 may be an access terminal, a UE, a subscriber unit, a subscriber station, a mobile station, a mobile console, a remote station, a remote terminal, a mobile device, a user terminal, a terminal, a wireless communications device, a user agent, or user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device, another processing device connected to a wireless modem, an on-board device, a wearable device, a terminal in a 5G network, a terminal in a future evolved network or the like.

The terminal 110 may be applied to device to device (D2D) communication.

The wireless communication system 100 may further include a core network device 130 that communicates with a base station. The core network device 130 may be a 5G core (5GC) device, such as an access and mobility management function (AMF), an authentication server function (AUSF), a user plane function (UPF), or a session management function (SMF). Alternatively, the core network device 130 may also be an evolved packet core (EPC) device in the LTE network, such as a session management function + core packet gateway (SMF+PGW-C) device. It should be understood that the SMF+PGW-C may simultaneously implement functions of both the SMF and PGW-C. During the process of network evolution, the aforementioned core network may also be called by other names, or the functions of the core network may be divided to form a new network entity, which is not limited in the embodiments of the present disclosure.

One base station, one core network device and two terminals are exemplarily illustrated in FIG. 1A. Optionally, the wireless communication system 100 may include multiple base stations, and another number of terminals may be included in the coverage of each base station, which is not limited in the embodiments of the present disclosure.

FIG. 1B is an example of architecture of another communication system in which an embodiment of the present disclosure is applied.

As illustrated in FIG. 1B, the communication system 100 may include an access point (AP) 110 and a station (STA) 120 that accesses a network through the AP 110. In some scenarios, the AP 110 may be referred to as an AP STA, i.e., the AP 110 may also be an STA in a sense. In some scenarios, the STA 120 may be referred to as a non-AP STA. In some scenarios, the STA 120 may include an AP STA and a non-AP STA. The communication in the communication system 100 may include: communication between the AP 110 and the STA 120, or communication between the STA 120 and the STA 120, or communication between the STA 120 and a peer STA. Here, the peer STA may be referred to as a device that communicates with a peer of the STA 120, for example, the peer STA may be an AP or a non-AP STA.

Herein, the AP 110 may serve as a bridge connecting a wired network and a wireless network, with a primary function of connecting various wireless network clients together, and then accessing the wireless network to Ethernet. The AP 110 may be a terminal (such as a mobile phone) or a network device (such as a router) with a WiFi chip.

It should be noted that the role of the STA 120 in the communication system may not be fixed. That is, the role of the STA 120 in the communication system may be switched between the AP and the STA. For example, in some scenarios, when the mobile phone is connected to the router, the mobile phone may act as the STA; and when the mobile phone serves as a hotspot for another mobile phone, the mobile phone may act as the AP.

In some embodiments, the AP 110 and the STA 120 may be devices applied in the Internet of vehicles, Internet of things (IoT) nodes and sensors and the like in the IoT, smart cameras, smart remote controllers and smart water meters and electrical meters and the like in smart home, as well as sensors and the like in a smart city.

In some embodiments, the AP 110 may be a device that supports an 802.11be standard. The AP may be a device that supports various current and future WLAN standards from the 802.11 family, such as 802.11ax, 802.11ac, 802.11n, 802.11g, 802.11b and 802.11a. In some embodiments, the STA 120 may support the 802.11be standard. The STA may also support various current and future WLAN standards from the 802.11 family, such as 802.11ax, 802.11ac, 802.11n, 802.11g, 802.11b and 802.11a.

In some embodiments, the AP 110 and/or the STA 120 may be deployed on land, including indoor or outdoor, handheld, wearable or vehicle-mounted. The AP 110 and/or the STA 120 may also be deployed on the water (such as ships). Moreover, the AP 110 and/or the STA 120 may also be deployed in the air (such as airplanes, balloons and satellites).

In some embodiments, the STA 120 may be a device that supports the WLAN/WiFi technology, such as a mobile phone, a tablet computer (Pad), a computer with a wireless transceiver function, a virtual reality (VR) device, an augmented reality (AR) device, a wireless device or a set-top box in an industrial control, a wireless device or a vehicle-mounted communication device in self-driving, a wireless device in remote medical, a wireless device in smart grid, a wireless device in transportation safety, a wireless device in smart city, or a wireless device in smart home, a vehicle-mounted communication device, a wireless communication chip/an application specific integrated circuit (ASIC)/a system on chip (SoC), and the like.

Exemplarily, the STA 120 may also be a wearable device. The wearable device referred to as a wearable smart device, which is a generic term of the wearable devices that are intelligently designed and developed by applying wearable technologies to daily wear, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices have full functions and large size, and may realize complete or partial functions without relying on smart phones, such as smart watches or smart glasses, as well as those that only focus on a certain type of application function and need to be used in conjunction with other devices (e.g., smart phones), such as various smart bracelets and smart jewelry for physical sign monitoring.

It is understood that FIG. 1 is merely an example of the present disclosure, and should not be construed as any limitation of the present disclosure. For example, FIG. 1 merely illustrates one AP and two STAs exemplarily. In some embodiments, the communication system 100 may include multiple APs and another number of STAs, which are not limited in the embodiments of the present disclosure.

It should be noted that FIGS. 1A and 1B illustrate the system to which the present disclosure is applicable by way of examples only. Of course, the methods illustrated in the embodiments of the present disclosure may also be applicable to other systems. Moreover, the terms "system" and "network" are usually used interchangeably in the present disclosure. The term "and/or" herein is only used to describe an association relationship between associated objects, and represents that there may be three relationships. For example, A and/or B may represent the three conditions: independent existence of A, existence of both A and B, and independent existence of B. In addition, the character "/" in the present disclosure usually represents that preceding and following associated objects form an "or" relationship. It should also be understood that the term "indicate" mentioned in the embodiments of the present disclosure may refer to a direct indication or an indirect indication, and may also be indicative of an associative relationship. For example, A indicates B, which may represent that A directly indicates B (e.g., B may be acquired through A); or may represent that A indirectly indicates B (e.g., A indicates C, and B may be acquired through C); or may represent that there is an association between A and B. It should also be understood that the term "correspond" mentioned in the embodiments of the present disclosure may indicate a direct correspondence relationship or an indirect correspondence relationship between associated objects, or may indicate an association relationship between the objects, or a relationship of indicating and being indicated, configuring and being configured, etc. It should also be understood that the phrase "predefined" or "predefined rule(s)" mentioned in the embodiments of the present disclosure may be implemented by pre-storing corresponding code(s), table(s) or other ways that may be used for indicating associated information in devices (e.g., including the terminal and the network device), and the specific implementation of which is not limited in the present disclosure. For example, the "predefined" may mean that it is defined in a protocol. It should also be understood that, in the embodiments of the present disclosure, the term "protocol" may be a standard protocol in the communication field, such as an LTE protocol, an NR protocol, and related protocols to be applied in a future communication systems, which are not limited in the present disclosure.

In order to facilitate the understanding of the technical solutions in the embodiments of the present disclosure, the related technologies of the embodiments of the present disclosure are described below. The following related technologies, used as optional solutions, may be combined with the technical solutions in the embodiments of the present disclosure in various ways. Such combinations shall fall within the scope of protection of the embodiments of the present disclosure.

Taking a WiFi system as an example below, a specific access process between a terminal and a network node is introduced.

The following three phases may be generally required for the STA to access a basic service set (BSS): a scanning (SCAN) phase, an authentication phase, and an association phase.

The STA performs the scanning firstly, and the scanning includes active scanning and passive scanning.

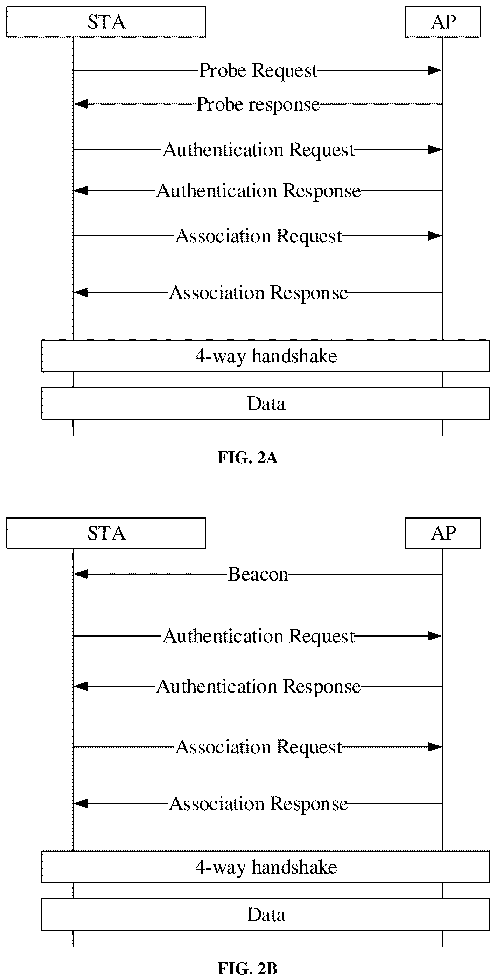

Herein, with reference to FIG. 2A, the active scanning means that the STA transmits a probe request frame on a channel supported by the STA, to detect a surrounding wireless network; and after the AP receives the probe request frame, the AP transmits a probe response. With reference to FIG. 2B, the passive scanning means that the STA monitors a beacon frame that is regularly transmitted by the AP on different channels, to discover the wireless network, where the beacon frame includes basic information and a capability of a BSS to which the AP belongs.

The STA discovers the BSS through the scanning process, and further acquires information of the BSS. Then, the STA initiates an authentication process to determine an identity of the STA, and only the STA whose identity is authenticated successfully may perform the wireless access. With reference to FIGS. 2A and 2B, the authentication process includes two operations of an authentication request and an authentication response, which respectively correspond to an authentication request frame being transmitted by the STA, and an authentication response frame being responded by the AP.

The STA that is authenticated successfully may initiate an association process. The association process is a process of wireless link service negotiation between the STA and the AP. The association process includes two operations of an association request and an association response, which respectively correspond to an association request frame being transmitted by the STA, and an association response frame being responded by the AP.

After the above access process is completed, the STA and the AP further need to securely verify and exchange a secret key through a 4-way handshake procedure, thereby performing the subsequent communication by using the secret key, and verifying validity of the peer device, to prevent man-in-the-middle attacks.

After the above operations are completed, data transmission may be performed between the STA and the AP.

A wireless access in vehicular environments (WAVE) technology is introduced in detail below.

The media access control (MAC) layer and physical layer protocols of the WAVE are mainly defined in 802.11p. In the WAVE, in order to solve the problem of a rapid change of a network topology, a WAVE Basic Service Set (WBSS) mode and an outside the context of a BSS (OCB) mode are introduced in the MAC layer.

In the WBSS mode, the network node transmits, through a control channel, a beacon frame that includes a service type and an automatic configuration parameter, to establish a WBSS network. If another node is interested in a service content of the beacon frame, the node may only need to exchange the WAVE beacon once to join the WBSS.

It should be noted that each node may only belong to one WBSS, and the node that receives the WAVE beacon frame may forward the WAVE beacon frame twice to increase the number of nodes in the WBSS. Although the WBSS is established by the initiating node, after the establishment, even if the initiating node no longer exists, the WBSS may continue to operate normally. The WBSS may cease only when no node remains within the WBSS. All of the nodes within the WBSS use the same BSS identifier (BSSID, which is a 48-bit MAC address of the initiating node), to securely perform communication with the channel.

In the OCB mode, the vehicle node may directly communicate with other nodes within the range without authentication and association, except that the node needs to set the BSSID as a Wildcard (with the value of FF: FF: FF: FF: FF) in a transmitting frame. This mode is mainly used for low-latency transmission of emergency security information.

Classification of zero-power terminals is introduced below.

With the development of the communication technology, there are an increasing number of application scenarios and IoT terminals in the IoT. Meanwhile, the development of the communication technology may also have higher requirements for the cost and power consumption of the terminals. Particularly, the applications of low-power, low-complexity and low-cost zero-power terminals have become a key technology of the IoT, which enriches the type and the number of terminals connected to the 5G network, and truly realizes the Internet of Everything.

Based on power sources and usage modes of the zero-power terminals, the zero-power terminals may be classified into the following types.

### 1) Passive zero-power terminal

The zero-power terminal does not need a built-in battery. When the zero-power terminal approaches a network node (such as a reader of a radio frequency identification (RFID) system), the zero-power terminal is in a near-field range formed by antenna radiation of the network node. Therefore, an induced current is generated by the antenna of the zero-power terminal through electromagnetic induction, and the induced current drives a low-power chip circuit of the zero-power terminal. Therefore, demodulation of a forward link signal and modulation of a backward link signal and the like can be realized. For the back scattering link, the implementation of back scattering is utilized by the zero-power terminal for the signal transmission.

Accordingly, whether for the forward link or the reverse link, no built-in battery is needed to drive the passive zero-power terminal, making the passive zero-power terminal to be a true zero-power terminal.

Since the passive zero-power terminal does not need the battery, a radio-frequency circuit and a baseband circuit of the passive zero-power terminal are very simple. For example, a low noise amplifier (LNA), a power amplifier (PA), a crystal oscillator, an analog-to-digital converter (ADC) and the like are not required, so that the passive zero-power terminal has many advantages, such as a small size, a light weight, a low cost and a long service life.

### 2) Semi-passive zero-power terminal

The semi-passive zero-power terminal is not equipped with a conventional battery by itself, but it may use a power harvesting module to harvest the ambient power (such as wireless radio frequency energy) and further store the harvested power in a power storage unit (such as a capacitor). After acquiring the power, the power storage unit may drive the low-power chip circuit of the zero-power terminal. Therefore, the demodulation of the forward link signal and the modulation of the backward link signal and the like can be realized. For the back scattering link, the zero-power terminal may implement the signal transmission through the back scattering manner or the active transmission manner.

Accordingly, whether for the forward link or the reverse link, no built-in battery is needed to drive the semi-passive zero-power terminal. Although the power stored in the capacitor is used during the operation of the semi-passive zero-power terminal, the power is sourced from the ambient power harvested by the power harvesting module, making the semi-passive zero-power terminal to be a true zero-power terminal.

The semi-passive zero-power terminal inherits many advantages of the passive zero-power terminal, so that the semi-passive zero-power terminal has many advantages, such as a small size, a light weight, a very low cost and a long service life.

### 3) Active zero-power terminal

The zero-power terminal used in some scenarios may also be the active zero-power terminal, which may include a built-in battery. The battery is used for driving the low-power chip circuit of the zero-power terminal. Therefore, the demodulation of the forward link signal and the modulation of the backward link signal and the like can be realized. For the back scattering link, the zero-power terminal implements the signal transmission through the back scattering manner or the active transmission manner. Such active zero-power terminal, despite having the built-in battery, has an extremely low power consumption and complexity, so that the active zero-power terminal can have a smaller capacity battery, thus achieving smaller cost and size. The built-in battery may also be used as the power storage unit for the power harvesting module to store the harvested ambient power, thereby achieving a longer maintenance cycle or being even maintenance-free.

The active zero-power terminal is powered by the built-in battery, which can increase a communication range of the zero-power terminal and improve communication reliability. As such, the active zero-power terminal may be applied in some scenarios that require relatively high requirements in terms of the communication range and a reading latency.

Logistics and warehousing are typical application scenarios of the zero-power communication. A large number of goods need to be frequently transferred, stored, loaded and unloaded, and inventoried in logistics stations or warehouses. With the occurrence of warehouse ordering, goods inbound, goods management and goods outbound, a large amount of warehousing information may be generated, and such information generally has the characteristics of frequent data reading operations and a high latency requirement. The zero-power terminal itself has the characteristics of an extremely low cost, a small size, maintenance-free, durability, and a long life. The zero-power terminal is especially suitable for recording, saving, and updating goods information in the logistics and the warehousing, and building a logistics and warehousing system based on zero-power IoT. Moreover, an operating cost can be further reduced, and the efficiency of logistics and warehousing management can be significantly improved, which is beneficial to realizing the smart logistics and smart warehousing. The positioning scenario based on the zero-power terminal also requires the AP or the STA to read the information stored by the zero-power terminal, such as positioning information stored by the zero-power terminal, so as to perform the positioning by the positioning information reported by the zero-power terminal.

A cellular passive IoT technology is introduced below.

A passive IoT device may be realized based on the existing zero-power terminal and extended thereon to be suitable for cellular IoT applications.

In the NR system and WiFi system, the terminal with the characteristics of battery-free and low cost can support deployment of IoT devices in large quantities at a low cost as well as maintenance-free of the loT devices. The current standard is studying how to support an ambient power-based IoT terminal (also referred to be as an ambient powered IoT or AMP terminal, an A-IoT terminal, or a passive IoT terminal, which are equivalent and replaceable) in the NR system and WiFi system. The power required for the operation of the AMP terminal comes from the ambient power harvesting, and the source of the ambient power can be wireless signals, solar energy, thermal energy, etc. Such devices are similar to the passive or semi-passive devices in the zero-power communication.

In related art, there may be a complex access process before the terminal communicates with the network node. Taking the WiFi system as an example, during the access process of 802.11, the STA and the AP, before communicating with each other, need to complete the scanning procedure, authentication procedure, association procedure and a 4-way handshake procedure for exchanging the secret key.

The zero-power terminal, which has the low complexity and low power consumption, may not necessarily be able to support the above complex access process. Particularly for the AMP terminal, its limited energy source poses a great challenge to complete the conventional access process, which may bring excessive latency in the access process. As such, it is difficult for some IoT application scenarios with relatively high latency requirements.

For the logistics and warehousing scenario, the zero-power communication is mainly characterized by a frequent, small data volume and a rapidly changing network topology, which requires rapid reading and identification of goods information in the logistics process. If the zero-power communication is supported in the 802.11 technology, the existing access process cannot satisfy such communication requirements. For some zero-power communication scenarios similar to the logistics scenario, there is no need to perform a large amount of data transmissions. The main communication requirement is to identify the information carried by the zero-power terminal bound to the goods, such as an identifier (ID) of the zero-power terminal. This is similar to the function of the existing RFID, but the zero-power communication has a greatly improved communication distance and compatibility with the existing 802.11 system. Therefore, how to support such type of zero-power communication in the existing systems is a problem needed to be solved.

The WAVE technology is a technology used for the Internet of vehicles, which can, by reducing the overhead of the access process, adapt to the rapid change of the network topology as well as reduce the latency of communication establishment. The advantages of the technology are also needed by the zero-power communication. However, the communication terminals in the Internet of vehicles are mainly vehicles, which are peer-to-peer terminals and have the same requirements for capabilities. In the zero-power communication, the zero-power terminal has much lower capability and complexity than the AP with which the zero-power terminal communicates. For example, the zero-power terminal may not support independent channel accessing, such as a carrier sense multiple access with collision avoidance (CSMA/CA) mechanism, and the zero-power terminal does not even have an active transmission capability and only supports the back scattering communication, etc.

Accordingly, there is provided a communication method in an embodiment of the present disclosure. Based on the communication method, the communication requirements of the terminal (such as a low-power terminal, a low-complexity terminal, a low-capability terminal and a zero-power terminal) can be satisfied.

To facilitate the understanding of the technical solutions in the embodiments of the present disclosure, the technical solutions in the present disclosure are described in detail below through the specific embodiments. The aforementioned related technologies, used as optional solutions, may be combined with the technical solutions of the embodiments of the present disclosure in various ways, and such combinations shall fall within the scope of protection of the embodiments of the present disclosure. The embodiments of the present disclosure include at least part of the following contents.

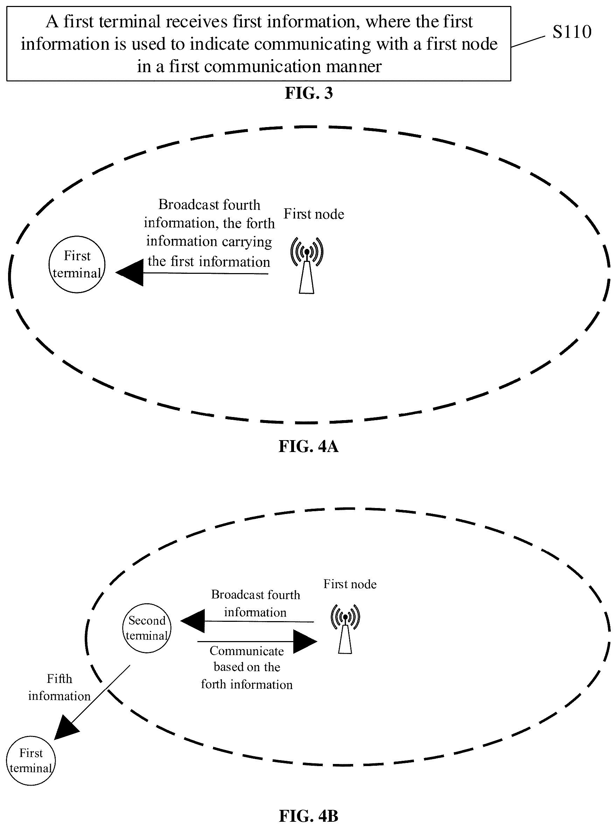

FIG. 3 illustrates a communication method according to an embodiment of the present disclosure, and the communication method includes the following operation S110.

At block S110, a first terminal receives first information, where the first information is used to indicate communicating with a first node in a first communication manner.

It is noted that the first terminal may be a terminal with low power consumption, low complexity and low cost. The terminal with low power consumption, low complexity and low cost may be referred to as a zero-power terminal (e.g., an ambient power AMP terminal), a low-power terminal, a low-cost terminal, a low-capability terminal, or the like, which is not limited in the embodiments of the present disclosure. Herein, the zero-power terminal may include an ambient power based device, that is, the AMP terminal. The ambient power may include wireless radio frequency energy, solar energy, thermal energy, mechanical energy, and the like. From the perspective of energy harvesting, the zero-power terminal may also be referred to as an energy harvesting device.

Moreover, the first node may be a network node that communicates with the first terminal, for example, the first node may be an AP in a WiFi system or may be a base station in a cellular system. Herein, the AP may be an IoT node, a sensor and the like in the IoT, a smart camera, a smart remote controller, a smart water meter and electricity meter, a smarter sensor and the like in a smart industry, as well as a sensor and the like in a smart city. The base station may be a macro base station, a micro base station, a femto base station, or the like, which is not limited in the embodiments of the present disclosure.

Exemplarily, the communication method provided in the embodiments of the present disclosure may be applied to the zero-power communication. The communication devices in the zero-power communication may include a zero-power terminal and a network node. The zero-power communication may be applied in the cellular system illustrated in FIG. 1A or applied in the WiFi system illustrated in FIG. 1B. Accordingly, the network node may communicate with the zero-power terminal, and may also provide wireless power supply to the zero-power terminal.

In an embodiment of the present disclosure, the first terminal may receive the first information. It is noted that the first information may be transmitted by the first node or transmitted by another terminal, which is not limited in the embodiments of the present disclosure.

In some embodiments, the first communication manner may be that the terminal communicates with the first node based on the received first information. It is understood that, in the first communication manner, the terminal may directly communicate with the first node under the indication of the first information.

It is understood that the first communication manner in the embodiments of the present disclosure is different from a conventional communication manner (which is referred to as a second communication manner in the embodiments of the present disclosure). Herein, the second communication manner may be that the terminal communicates with the first node after accessing the first node. That is, the second communication manner includes a process of the terminal accessing the first node.

In some embodiments, with reference to FIGS. 2A and 2B, the terminal accessing the first node may include one or more of the following: scanning a wireless network corresponding to the first node; performing identity authentication with the first node; establishing an association relationship with the first node; and performing four-way handshake communication with the first node.

It is understood that, in the second communication manner, before the terminal communicates with the node, the procedures of the scanning, authentication, association and four-way handshake communication may be required to be performed between the terminal and the node; and then, the terminal can communicate with the node.

In the embodiments of the present disclosure, the first communication manner may not include accessing the first node; or the first communication manner may not include the access process. That is, in the first communication manner, the terminal may directly communicate with the first node without performing the procedures such as the scanning, authentication, association, and four-way handshake communication.

In some embodiments, the first communication manner may be understood as a simplified access manner. Under the indication of the first information, the terminal may realize the simplified access process without performing the conventional procedures of scanning, authentication, association and four-way handshake, so that the first terminal can realize the communication with the first node while reducing the power consumption and latency of the terminal.

It is noted that, in the embodiments of the present disclosure, the first node may only support the first communication manner. That is, the first node may support the terminal to communicate with the first node based on the first information. In addition, the first node may support the first communication manner and the second communication manner. That is, the first node may support the terminal to directly communicate with the first node based on the first information; and the first node may also support the terminal to communicate with the first node after establishing a communication connection with the first node through the access process, which is not limited in the embodiments of the present disclosure.

It should be noted that the zero-power terminal, the low-power terminal, the low-cost terminal and the low-capability terminal have limited operating time, extremely low power consumption requirements, and low latency requirements in some application scenarios. Therefore, such terminals may face many challenges for establishing the communication with the network node by using the existing access process. In the communication method provided in the embodiments of the present disclosure, the first terminal may receive the first information; and directly communicate, based on the indication of the first information, with the first node without accessing the first node. Thereby, the latency and power consumption for the terminal to access the network node can be greatly reduced.

In an embodiment of the present disclosure, the first information may include one or more of the following:
first identification information, used to identify that the first node supports the first communication manner;
second identification information, used to identify the first node;
third identification information, used to identify a device type and/or a service type supported by the first node; and
a transmission parameter, used to configure the transmission parameter for communicating with the first node in first communication manner.

It is understood that the first information may include multiple types of identification information to identify different contents.

Herein, the first identification information may identify that the first node supports the first communication manner. In one example, the first identification information may be control information, which is used for indicating that the first node supports the first communication manner. For example, when a value of a specific information field in the first information is a first value (e.g., 0 or 1 or another value), it may be identified that the first node supports the first communication manner. Correspondingly, when the value of the specific information field in the first information is a second value (e.g., 0 or 1 or another value), it may be identified that the first node does not support the first communication manner. In another example, the first identification information may be identification related to the first node. The identification information related to the first node may be used to identify that the first node supports the first communication manner. For example, the first identification information may be an ID of the first node, or may be identification information of a service provided by the first node (e.g., a BSSID provided by the first node), or may be device type information and/or service type information supported by the first node, or the like, which is not limited in the embodiments of the present disclosure.

It is noted that the first identification information may be predefined. For example, the first identification information may be a wildcard with a value of FF: FF: FF: FF: FF: FF. It is understood that, after receiving the first information, the first terminal may determine whether the first information carries the predefined first identification information. If the first information carries the predefined first identification information, the first terminal may determine that the first node supports the first communication manner. Otherwise, if the first information does not carry the predefined first identification information, or the carried identification information is not the predefined first identification information, the first terminal may determine that the first node does not support the first communication manner.

In an embodiment of the present disclosure, the second identification information may be used to identify the first node. For example, the second identification information may be an ID of the first node, or may be identification information of a service provided by the first node (e.g., the BSSID provided by the first node), or may be device type information and/or service type information supported by the first node, or the like, which is not limited in the embodiments of the present disclosure.

In addition, in an embodiment of the present disclosure, the third identification information may be used to identify the device type and/or the service type supported by the first node. Herein, the first node may support the terminal satisfying the device type and/or the service type to communicate with the first node in the first communication manner. That is, the third identification information may identify the device type and/or the service type of the terminal which communicates with the first node in the first communication manner.

In some embodiments, the aforementioned device type may be a device type with lower confidentiality requirements but higher latency and power consumption requirements. The aforementioned service type may be a service type with lower confidentiality requirements but higher latency and power consumption requirements. It is understood that the terminal of the aforementioned device type information and/or the terminal supporting the service type information may directly communicate with the first node in the first communication manner without performing the access process. As such, the latency and power consumption of the communication between the terminal and the node can be reduced.

Exemplarily, for logistics data reporting or a zero-power terminal used for logistics, the reported data mainly includes the ID of the zero-power terminal or goods information. The requirements for confidentiality of the reported data are not high, but the requirements for latency and power consumption are relatively high; thus, such zero-power terminal may communicate with the first node in the first communication manner. In another example, for positioning data reporting or a zero-power terminal used for positioning, the reported data mainly includes location information of public areas, which is publicly available data. The requirements for confidentiality of the reported data are not high, but the requirements for latency and power consumption are also relatively high; thus, such zero-power terminal may communicate with the first node in the first communication manner.

It should be noted that the first identification information may be the same as the second identification information; and/or the second identification information may be the same as the third identification information; and/or the first identification information may be the same as the third identification information. The embodiments of the present disclosure are not limited thereto.

In an embodiment of the present disclosure, the first information may further include a transmission parameter. In some embodiments, the transmission parameter may include one or more of the following: a target time domain resource, a target frequency domain resource, power information, a modulation mode, a coding mode, and a data rate.

Herein, the target time domain resource may be a time domain resource that is available for the terminal to perform uplink transmission and/or downlink transmission with the first node in the first communication manner. For example, the target time domain resource may include slot information, time domain symbol information, and the like. The target frequency domain resource may be channel information or a frequency domain location and bandwidth information in the channel that is available for the terminal to perform the uplink transmission and/or downlink transmission with the first node in the first communication manner. In addition, the power information may include a transmission power for the terminal to perform the uplink transmission with the first node, and/or a reception power for the terminal to receive the downlink transmission from the first node. By using the aforementioned information of modulation mode, the coding mode, and the data rate, the terminal may set the manner of transmission modulation and coding for the communication with the first node.

In some embodiments, the first information may be carried in a bit field in an MAC header or in a physical layer portion in a presentation protocol data unit (PPDU) frame, and may also be carried in a frame body portion of the PPDU frame, which is not limited in the embodiments of the present disclosure.

In an embodiment of the present disclosure, the first information may be from fourth information transmitted by the first node in a broadcast manner.

Alternatively, the first information may be from fifth information transmitted by a second terminal, and the fifth information may be transmitted by the second terminal based on the fourth information.

It is understood that the first information may be transmitted by the first node or by another terminal (herein referred to as the second terminal in the embodiments of the present disclosure).

In some embodiments, the first node may transmit fourth information in the broadcast manner. Here, the fourth information may carry the first information.

It is noted that the fourth information may be periodic information or aperiodic information. In other words, the first node may broadcast the fourth information according to a preset period, or may broadcast the fourth information as actually needed according to a specific implementation, which is not limited in the embodiments of the present disclosure

Exemplarily, in the WiFi system, the first node may be an AP. The AP may transmit a broadcast frame and carry the first information through the broadcast frame. Herein, the broadcast frame may be a management frame or a control frame, and the broadcast frame may be a beacon frame, a discovery frame, a trigger frame, or the like, which is not limited in the embodiments of the present disclosure. In addition, in the cellular system, the first node may be a base station. The base station may broadcast system information and carry the first information through the system information. Herein, the system information may be a master information block (MIB), a system information block (SIB) or another broadcast information, which is not limited in the embodiments of the present disclosure.

It should be understood that all terminals located within the communication coverage range of the first node may receive the fourth information. In such way, the terminal(s) within the communication coverage range of the first node, after receiving the fourth information, may communicate with the first node in the first communication manner based on the indication of the first information carried in the fourth information.

It is noted that, in the embodiment, the first terminal may be any terminal located within the communication coverage range of the first node. Exemplarily, with reference to FIG. 4A, the first terminal located within the communication coverage range of the first node may receive the fourth information that is broadcast by the first node.

In some embodiments, the second terminal may transmit the fifth information, and the fifth information may carry the first information.

With reference to FIG. 4B, the second terminal may be a terminal located within the communication coverage range of the first node, and the second terminal may receive the fourth information broadcast by the first node. In case that the second terminal receives the fourth information, on the one hand, the second terminal may communicate with the first node in the first communication manner based on the first information carried by the fourth information. On the other hand, when receiving the fourth information, the second terminal may be triggered to transmit the fifth information.

It is noted that the second terminal may transmit the fifth information in the broadcast manner, may transmit the fifth information in a multicast manner, or may transmit the fifth information in a unicast manner, which is not limited in the embodiments of the present disclosure.

With reference to FIG. 4B, the first terminal is located outside the communication coverage range of the first node and is located within the communication coverage range of the terminal. After receiving the fourth information broadcast by the first node, the second terminal may transmit the fifth information. In such way, the first terminal within the communication coverage range of the second terminal may receive the fifth information, and further acquire the first information carried in the fifth information. As such, the second terminal carries the first information through the transmitted fifth information, which can expand the communication coverage range of the original first node and improve the flexibility of communication.

It is noted that the fifth information may be the same as the fourth information. For example, the second terminal may directly forward the fifth information. The fifth information may be different from the fourth information. For example, the second terminal may add information (e.g., information related to the second terminal) other than the fourth information into the fifth information, or the second terminal may forward only portion of the information in the fifth information. The embodiments of the present disclosure are not limited thereto.

In some embodiments, in case that the first information is from the fourth information transmitted by the first node in the broadcast manner, the first terminal may transmit sixth information. The sixth information may include at least portion of the first information.

It is understood that, with reference to FIG. 4A, in case that the first terminal is located within the communication coverage range of the first node, the first terminal may receive the fourth information broadcast by the first node. In such case, when the first information is from the fourth information transmitted by the first node in the broadcast manner, the first terminal may be triggered to transmit the sixth information based on the fourth information. All or portion of the first information is carried in the sixth information, so that other terminals near the first terminal may establish communication with the first node based on the sixth information. As such, the communication coverage range of the original first node can be expanded and the flexibility of communication can be improved.

Exemplarily, the sixth information may include one or more of the following: the first identification information, the second identification information, the third identification information, and the transmission parameter.

It should be noted that the sixth information may be the same as or different from the fifth information, which is not limited in the embodiments of the present disclosure.

It is further noted that the first terminal may transmit the sixth information in the broadcast manner, may transmit the sixth information in the multicast manner, or may transmit the sixth information in the unicast manner, which is not limited in the embodiments of the present disclosure.

In an embodiment of the present disclosure, the first terminal may receive the first information in a first time domain resource and/or a first frequency domain resource. The first time domain resource and/or the first frequency domain resource may be predefined.

It is understood that the first information may be transmitted on the predefined first time domain resource and/or first frequency domain resource. Correspondingly, the first terminal may receive the first information in the predefined first time domain resource and/or first frequency domain resource. In such way, the power consumption and latency caused by the additional signal scanning of the terminal can be reduced.

Exemplarily, the predefined first time domain resource may be a fixed time domain symbol position in each slot. The predefined first frequency domain resource may include a specific channel in a specific frequency band, such as a channel 1 in a 2.4 GHz frequency band, channels 40, 44, 149, 153 and the like in a 5 GHz frequency band, or a specific channel in a frequency band below 1 GHz, which is not limited in the embodiments of the present disclosure.

It is noted that the time domain resource and/or the frequency domain resource for the first node to transmit the first information (i.e., the time domain resource and/or the frequency domain resource for the first node to broadcast the fourth information) may be different from the time domain resource and/or the frequency domain resource for the second terminal to transmit the first information (i.e., the time domain resource and/or the frequency domain resource for the second terminal to transmit the fifth information). Exemplarily, the first node may transmit the fourth information in the first time domain symbol in each slot, and the second terminal may transmit the fifth information in the last time domain symbol in each slot. Alternatively, the first node may transmit the fourth information in the channel 40 in the 5 GHz frequency band, and the second terminal may transmit the fifth information in the channel 44 in the 5 GHz frequency band. Accordingly, the first terminal may receive the first information in all of the above resources, so that the scanning in multiple time domain and frequency domain resources by the first terminal can be avoided, thereby reducing the power consumption and latency of the terminal.

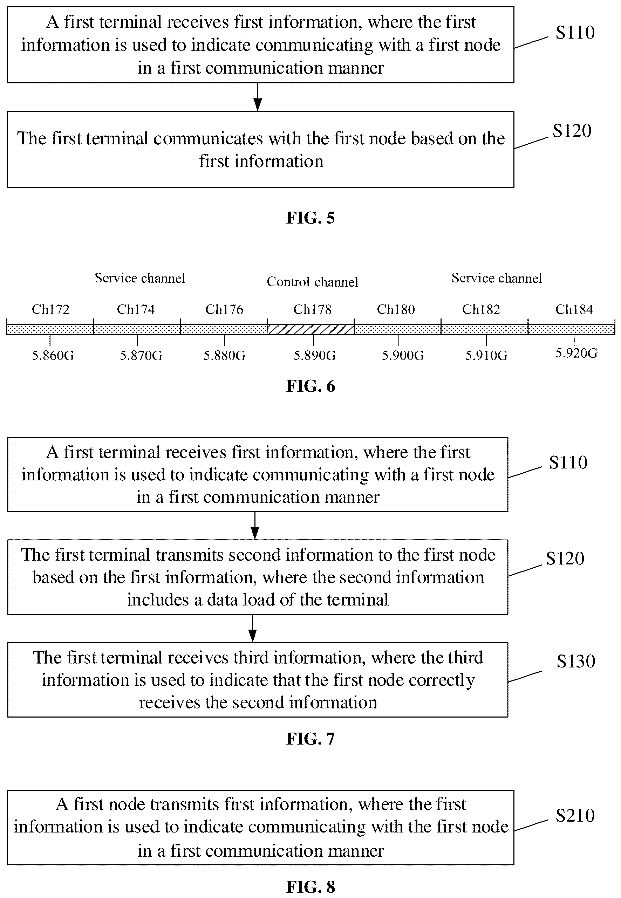

In an embodiment of the present disclosure, with reference to FIG. 5, the communication method provided in the embodiments of the present disclosure may further include the following operation S120.

At block S120, the first terminal communicates with the first node based on the first information.

It is understood that, in the communication method provided by the embodiments of the present disclosure, in order to reduce the power consumption and latency of the terminal, after receiving the first information, the terminal may communicate with the first node based on the first information. Herein, the first terminal may directly communicate with the first node without accessing the first node (or without performing the access process). That is, the first terminal may directly communicate with the first node based on the first information without performing the procedures such as the scanning, authentication, association and four-way handshake communication in the conventional access process. As such, the power consumption and latency of the terminal accessing the network node can be reduced.

In some embodiments, the first terminal may receive one or more pieces of first information.

In a scenario where the first terminal receives a plurality of pieces of first information, the plurality of pieces of first information may correspond to the same first node or may correspond to different first nodes. In an embodiment of the present disclosure, the first information may include the second identification information, and the second identification information may identify the first node. If the two pieces of first information carry the same second identification information, it may be indicated that the two pieces of first information correspond to the same first node. If the two pieces of first information carry different pieces of second identification information, it may be indicated that the two pieces of first information correspond to different first nodes.

In a possible implementation, when there are the plurality pieces of first information, if the second identification information carried in one of at least two pieces of first information in the plurality pieces of first information is different from the second identification information carried in another one of the at least two pieces of first information, the first terminal may communicate with the first nodes corresponding to the second identification information in the at least two pieces of first information, respectively.

It can be understood that, when the plurality of first information include the first information corresponding to different first nodes, the first terminal may communicate with these different first nodes, respectively. Herein, the first terminal may respectively communicate with different first nodes based on the first information.

In another possible implementation, when there are the plurality pieces of first information, if the second identification information carried in one of at least two pieces of first information in the plurality pieces of first information is the same as the second identification information carried in another one of the at least two pieces of first information, the first terminal may select one of the at least two pieces of first information; and further communicate, based on the selected first information, with the first node corresponding to the selected first information.

In an example, in order to reduce the latency, the first terminal may select, from the at least two pieces of first information, the first information received firstly; and further communicate, based on the selected first information, with the first node identified by the second identification information in the selected first information.

In another example, the first terminal may randomly select the first information from the at least two pieces of first information, and further communicate, based on the selected first information, with the first node identified by the second identification information in the selected first information.

In yet another example, the first terminal may communicate, based on a target first signal in the at least two pieces of first information, with a first node corresponding to second identification information in the target first signal, where the target first signal has a signal strength greater than a first threshold.

Herein, the first threshold may be a predefined parameter. That is, when there are two or more pieces of first information, in the plurality of pieces of first information received by the first terminal, corresponding to the same first node, the first terminal may select, from the two or more pieces of first information, first information having the larger signal strength as the target first information; and then, the first terminal may communicate with the first node identified by the second identification information in the target first information. In such way, the reliability of communication between the first terminal and the first node can be ensured.

In addition, in the scenario where the first terminal receives a plurality of pieces of first information, the plurality of pieces of first information may correspond to the same service type and/or device type, or may correspond to different service types and/or device types. For example, some of the plurality of pieces first information may correspond to a logistics service and/or a logistics device, and some of the plurality of pieces first information may correspond to a positioning service and/or a positioning device. In an embodiment of the present disclosure, the first information may include the third identification information, and the third identification information may identify a service type and/or a device type supported by the first node. If the two pieces of first information carry the same third identification information, it may be indicated that the two pieces of first information correspond to the same service type and/or device type. If the two pieces of first information carry different pieces of third identification information, it may be indicated that the two pieces of first information correspond to different service types and/or device types.

In a possible implementation, when there are the plurality pieces of first information, if the third identification information carried in one of at least two pieces of first information in the plurality pieces of first information is different from the third identification information carried in another one of the at least two pieces of first information, the first terminal may communicate with the first nodes corresponding to the third identification information in the at least two pieces of first information, respectively.

It can be understood that, when two or more pieces of first information in the plurality of pieces of first information support different service types and/or device types, the first terminal may communicate with the first nodes that provide different service types and/or device types, respectively, which ensures that the first nodes supporting various service types and/or device types can acquire data of the first terminal.

In another possible implementation, when there are the plurality pieces of first information, if the third identification information carried in one of at least two pieces of first information in the plurality pieces of first information is the same as the third identification information carried in another one of the at least two pieces of first information, the first terminal may select one of the at least two pieces of first information; and further communicate, based on the selected first information, with the first node corresponding to the selected first information.

In an example, in order to reduce the latency, the first terminal may select, from the at least two pieces of first information, the first information received firstly; and further communicate, based on the selected first information, with the first node corresponding to the selected first information.

In another example, the first terminal may randomly select the first information from the at least two pieces of first information, and further communicate, based on the selected first information, with the first node corresponding to the selected first information.

In yet another example, the first terminal may communicate, based on a target first signal in the at least two pieces of first information, with a first node corresponding to the target first signal, where the target first signal has a signal strength greater than a first threshold.

Herein, the first threshold may be a predefined parameter. That is, when there are two or more pieces of first information, in the plurality of pieces of first information received by the first terminal, supporting the same service type or device type, the first terminal may select, from the two or more pieces of first information, first information having the larger signal strength as the target first information; and then, the first terminal may communicate with the first node identified by the second identification information in the target first information. In such way, the reliability of communication between the first terminal and the first node can be ensured.

In an embodiment of the present disclosure, with reference to FIG. 7, the operation of the first terminal communicating with the first node based on the first information in S120 may be implemented by the following manner.

The first terminal transmits second information to the first node based on the first information, where the second information includes a data load of the terminal.

Exemplarily, the data load may include identification information, goods information, positioning information, and the like, of the first terminal, which is not limited in the embodiments of the present disclosure.

It should be understood that the first terminal, after receiving the first information, may not access the first node (or does not perform the access process). That is, the first terminal may directly transmit the second information to the first node without performing the procedures such as the scanning, authentication, association and four-way handshake communication in the conventional access process. Thereby, the power consumption and latency of the terminal accessing the network node can be reduced.

Herein, the operation of the first terminal transmitting the second information to the second node based on the first information may include that the first terminal transmits the second information to the first node based on one or more of the following in the first information: the first identification information, the second identification information, the third identification information, and the transmission parameter.

In some embodiments, based on the first identification information and/or the second identification information in the first information, the first terminal may determine to transmit the second information to the first node in the first communication manner. The first terminal may determine whether to transmit the second information to the first node based on the service type and/or the device type identified by the third identification information. The first terminal may transmit the second information to the first node by using the transmission parameter in the first information.

In some embodiments, the first terminal may transmit the second information in a second time domain resource and/or a second frequency domain resource. Herein, the second time domain resource and/or the second frequency domain resource may be determined based on one or more of the following:
a transmission parameter, where the transmission parameter is carried in the first information and used to configure the transmission parameter for communicating with the first node in the first communication manner; and
a first time domain resource and/or a first frequency domain resource for the first terminal to receive the first information.

In a possible implementation, the first information may include the transmission parameter. The transmission parameter may be used to configure the transmission parameter for communicating with the first node in the first communication manner. The first terminal may determine, based on the transmission parameter in the received first information, the second time domain resource and/or the second frequency domain resource for transmitting the second information. That is, the first terminal may transmit the second information to the first node based on the resource indicated by the first information.

Herein, the transmission parameter may include a target time domain resource and/or a target frequency domain resource. The second time domain resource and/or the second frequency domain resource may be a time domain resource and/or a frequency domain resource, in the target time domain resource and/or the target frequency domain resource, corresponding to fifth identification information. The fifth identification information may be used to identify the first terminal.

In a practical application, considering that resource collision may occur when different terminals transmit the second information, the first terminal, after receiving the first information, may select, based on the fifth identification information, the matched time domain resource and/or frequency domain resource from the target time domain resource and/or the target frequency domain resource configured by the transmission parameter, to acquire the second time domain resource and/or the second frequency domain resource. In such way, the collision caused by the transmission of different terminals can be reduced, and the data transmission efficiency can be improved.

In another possible implementation, the second time domain resource and/or the second frequency domain resource for the first terminal to transmit the second information may have an association relationship with the first time domain resource and/or the first frequency domain resource for the first terminal to receive the first information. Herein, based on the first time domain resource and/or the first frequency domain resource for receiving the first information, the first terminal may determine the second time domain resource and/or the second frequency domain resource for transmitting the second information.

In an example, the second time domain resource may be separated from the first time domain resource by a certain time interval. In order to avoid resource collision among different terminals, the first terminal may determine a random number after receiving the first information, and further determine the second time domain resource based on the random number. Different random numbers may correspond to different time intervals.

In an example, the second frequency domain resource may be in the same frequency band or the same channel as that of the first frequency domain resource. With reference to FIG. 6, taking the 5.85-5.925 GHz band used in the WAVE technology as an example, a fixed Channel 178 (5.885-5.895 GHz) may be used as a control channel, which is used for the first node to transmit the first information and also used for the first terminal to receive the first information. Channels 172, 174, 176, 180, 182, 184 may be used as service channels, which are used for the first terminal to transmit the second information.

It is noted that the first terminal may determine, based on the transmission parameter, one or more of the following: a power, a modulation mode, a coding mode, a data rate, and the like for transmitting the second information.

In an embodiment of the present disclosure, in case that the first information includes third identification information, the third identification information may be used to identify the device type and/or the service type supported by the first node. The operation of the first terminal transmitting the second information to the first node in S120 may be implemented by the following operation.

When the device type of the first terminal matches the device type supported by the first node, and/or the service type supported by the first terminal matches the service type supported by the first node, the first terminal may transmit the second information to the first node.

It is understood that the first terminal, after receiving the first information, further needs to determine whether the first terminal is able to communicate with the first node in the first communication manner.

In an example, when the first information includes the third identification information, it may be understood that only the terminal with the device type and/or service type matching the device type and/or service type identified by the third identification information can transmit the second information to the first node in the first communication manner. Therefore, after receiving the first information, the first terminal needs to determine whether the device type and/or the service type of the first terminal match the device type and/or service type identified by the third identification information. If the device type and/or the service type of the first terminal match the device type and/or service type identified by the third identification information, the first terminal may communicate with the first node in the first communication manner, and further transmit the second information to the first node based on the first information. If the device type and/or the service type of the first terminal do not match the device type and/or service type identified by the third identification information, the first terminal may not communicate with the first node in the first communication manner. That is, the first terminal may not directly transmit the second information to the first node based on the first information.

Therefore, in the communication method provided in the embodiments of the present disclosure, the first node may indicate that the specific type of the terminal communicates with the first node by using a simplified access process. Thereby, the power consumption and latency for accessing of the specific terminal can be reduced.

In some embodiments, in addition to the data load of the first terminal, the second information may further include one or more of the following:
first identification information, used to identify that the first node supports the first communication manner;
second identification information, used to identify the first node;
third identification information, used to identify a device type and/or a service type supported by the first node;
fourth identification information, used to identify that the first terminal supports the first communication manner; and
fifth identification information, used to identify the first terminal.

It is understood that the second information may include multiple types of identification information to identify different contents.

Herein, the first identification information may identify that the first node supports the first communication manner. The second identification information may identify the first node, to indicate a receiving end of the second information. The third identification information may identify the device type and/or the service type supported by the first node, to indicate that the first terminal also supports the device type and/or service type.

It should be noted that the related descriptions of the first identification information, the second identification information, and the third identification information may refer to the above-described embodiments, and will not be elaborated herein again for the sake of brevity.

In some embodiments, the second information may further include the fourth identification information. The fourth identification information may identify that the first terminal supports the first communication manner; or the fourth identification information may identify that the second information is the information transmitted to the first node in the first communication manner.

In one example, the fourth identification information may be control information, which is used for indicating that the first terminal supports the first communication manner. For example, when a value of a specific information field in the second information is a first value (e.g., 0 or 1 or another value), it may be identified that the first terminal supports the first communication manner. In another example, the fourth identification information may be identification related to the first node, and the identification information related to the first node may be used to identify that the first terminal indicates the first communication manner. For example, the first identification information may be an ID of the first node, or may be identification information of a service provided by the first node (e.g., a BSSID provided by the first node), or may be device type information and/or service type information supported by the first node, or the like. The embodiments of the present disclosure are not limited thereto.

It is noted that the fourth identification information may be the same as the first identification information; the fourth identification information may be the same as the second identification information; or the fourth identification information may be the same as the third identification information.

In some embodiments, the second information may further include the fifth identification information, which is used for identifying the first terminal, that is, a transmitting end of the second information. Exemplarily, the second identification information may be an ID of the first terminal or other identity information, which is not limited in the embodiments of the present disclosure.

It is noted that the second information may be carried in a bit field in an MAC header or in a physical layer portion in a PPDU frame, and may also be carried in a frame body portion of the PPDU frame, which is not limited in the embodiments of the present disclosure.

In an embodiment of the present disclosure, in order to expand the communication coverage range of the first node or improve the rate for the terminal to transmit the data load to the first node, when the first terminal receives the first information within the communication coverage range of the first node (i.e., the first information is from the fourth information transmitted by the first node in the broadcast manner), the first terminal may not only transmit, based on the first information carried by the fourth information, the second information to the first node in the first communication manner, but also may be triggered to transmit the sixth information when receiving the fourth information. Herein, the sixth information may include at least portion of the first information. All or portion of the first information is carried in the sixth information, so that other terminals near the first terminal may establish communication with the first node based on at least portion of the first information carried by the sixth information. In such way, the communication coverage range of the original first node can be expanded, and the flexibility of communication can be improved.

In some embodiments, the first terminal may transmit the second information and the sixth information independently; or, the first terminal may carry the sixth information in the second information to reduce the communication signaling. The way for transmitting the second information and the sixth information is not limited in the embodiments of the present disclosure.

In an embodiment of the present disclosure, with reference to FIG. 7, the communication method provided in the embodiments of the present disclosure may further include the following operation S130.

At block S130, the first terminal receives third information, where the third information is used to indicate that the first node correctly receives the second information.

It is understood that the first node, after receiving the second information, may further transmit the third information to the first terminal that transmits the second information. The third information may be acknowledgement (ACK) information, which is used to confirm that the second information transmitted by the first terminal is correctly received.

It is noted that, when the first node does not correctly decode the second information, the first node may not transmit the third information to the first terminal, or the first terminal may transmit negative acknowledgement (NACK) information to the first terminal, which is used to indicate that the first node does not correctly receive the second information. Thus, the first terminal may retransmit the second information.

In some embodiments, when the third information is not received by the first terminal within a target duration after the first terminal transmits the second information, the first terminal may retransmit the second information until the third information is received or until the number of times the second information is transmitted reaches a target number.

In addition, when the first terminal receives the NACK information within the target duration after transmitting the first information, the first terminal may retransmit the second information to the first node. Herein, the target duration may be predefined.

Accordingly, in the communication method provided in the embodiments of the present disclosure, under the indication of the first information, the terminal may directly communicate with the first node based on the first information, without performing the conventional authentication procedure, association procedure, and a 4-way handshake procedure. Thereby, the communication with the node can be realized while reducing the power consumption and latency of the terminal.

The communication method according to the embodiments of the present disclosure has been described in detail above with reference to FIG. 3 from the perspective of the terminal. The communication method according to the embodiments of the present disclosure will be described in detail below with reference to FIG. 8 from the perspective of the first node. It should be understood that the operations performed by the first node correspond to the operations performed by the terminal, and redundant descriptions will be omitted below appropriately for the sake of brevity.

FIG. 8 illustrates a communication method according to an embodiment of the present disclosure, and the communication method includes the following operation S210.

At block S210, a first node transmits first information, where the first information is used to indicate communicating with the first node in a first communication manner.

Herein, the first communication manner may be for communicating with the first node based on the received first information. It is understood that, in the first communication manner, the terminal may directly communicate with the first node under indication of the first information.

It is understood that the first communication manner in the embodiments of the present disclosure is different from a conventional communication manner (which is referred to as a second communication manner in the embodiments of the present disclosure). Herein, the second communication manner may be that the terminal communicates with the first node after accessing the first node. That is, the second communication manner includes a process of the terminal accessing the first node.

In some embodiments, with reference to FIGS. 2A and 2B, the accessing the first node may include one or more of the following: scanning a wireless network corresponding to the first node; performing identity authentication with the first node; establishing an association relationship with the first node; and performing four-way handshake communication with the first node.

It is understood that, in the second communication manner, before the terminal communicates with the node, the procedures of the scanning, authentication, association and four-way handshake communication may be required to be performed between the terminal and the node; and then, the terminal can communicate with the node.

In the embodiments of the present disclosure, the first communication manner may not include accessing the first node; or the first communication manner may not include the access process. That is, in the first communication manner, the terminal may directly communicate with the first node without performing the procedures such as the scanning, authentication, association, and four-way handshake communication.

In the embodiments of the present disclosure, the first communication manner may not include accessing the first node; or the first communication manner may not include the access process. That is, in the first communication manner, the terminal may directly communicate with the first node without performing the procedures such as the scanning, authentication, association, and four-way handshake communication.

In some embodiments, the first communication manner may be understood as a simplified access manner. Under the indication of the first information, the terminal may realize the simplified access process without performing the conventional procedures of authentication, association and four-way handshake, so that the first terminal can realize the communication with the first node while reducing the power consumption and latency of the terminal.

It is noted that, in the embodiments of the present disclosure, the first node may only support the first communication manner. That is, the first node may support the terminal to communicate with the first node based on the first information. In addition, the first node may support the first communication manner and the second communication manner. That is, the first node may support the terminal to directly communicate with the first node based on the first information; and the first node may also support the terminal to communicate with the first node after establishing a communication connection with the first node through the access process, which is not limited in the embodiments of the present disclosure.

It should be noted that the zero-power terminal, the low-power terminal, the low-cost terminal and the low-capability terminal have limited operating time, extremely low power consumption requirements, and low latency requirements in some application scenarios. Therefore, such terminals may face many challenges for establishing the communication with the first node by using the existing access process. In the communication method provided in the embodiments of the present disclosure, the first terminal may receive the first information; and directly communicate, based on the indication of the first information, with the first node without accessing the first node. Thereby, the latency and power consumption for the terminal to access the network node can be greatly reduced.

In some embodiments, the first information may include one or more of the following:
first identification information, used to identify that the first node supports the first communication manner;
second identification information, used to identify the first node;
third identification information, used to identify a device type and/or a service type supported by the first node; and
a transmission parameter, used to configure the transmission parameter for communicating with the first node in first communication manner.

Herein, the transmission parameter may include one or more of the following: a target time domain resource, a target frequency domain resource, power information, a modulation mode, a coding mode, and a data rate.

In some embodiments, the first node may transmit the first information in a first time domain resource and/or a first frequency domain resource. The first time domain resource and/or the first frequency domain resource may be predefined.

In some embodiments, the communication method provided in the embodiments of the present disclosure may further include the following operation S220.

At block S220, the first node receives second information from a first terminal, where the second information includes a data load of the first terminal.

Herein, the second information may further include one or more of the following:
first identification information, used to identify that the first node supports the first communication manner;
second identification information, used to identify the first node;
third identification information, used to identify a device type and/or a service type supported by the first node;
fourth identification information, used to identify that the first terminal supports the first communication manner; and
fifth identification information, used to identify the first terminal.

In some embodiments, the first node may receive the second information in a second time domain resource and/or a second frequency domain resource. The second time domain resource and/or the second frequency domain resource may be determined based on one or more of the following:
a transmission parameter, where the transmission parameter is carried in the first information and used to configure the transmission parameter for communicating with the first node in the first communication manner; and
a first time domain resource and/or a first frequency domain resource for the first node to transmit the first information.

In some embodiments, the transmission parameter may include a target time domain resource and/or a target frequency domain resource. The second time domain resource and/or the second frequency domain resource may be a time domain resource and/or a frequency domain resource, in the target time domain resource and/or the target frequency domain resource, corresponding to fifth identification information. The fifth identification information may be used to identify the first terminal.

In some embodiments, the first node may transmit third information, where the third information is used to indicate that the first node correctly receives the second information.

In some embodiments, the operation of the first node transmitting the first information may be implemented by the following operation.

The first node may transmit fourth information in a broadcast manner, and the fourth information may include the first information.

It is noted that the fourth information may be periodic information or aperiodic information. In other words, the first node may broadcast the fourth information according to a preset period, or may broadcast the fourth information as actually needed according to a specific implementation, which is not limited in the embodiments of the present disclosure.

Exemplarily, in the WiFi system, the first node may be an AP. The AP may transmit a broadcast frame and carry the first information through the broadcast frame. Herein, the broadcast frame may be a management frame or a control frame, and the broadcast frame may be a beacon frame, a discovery frame, a trigger frame, or the like, which is not limited in the embodiments of the present disclosure. In addition, in the cellular system, the first node may be a base station. The base station may transmit system information and carry the first information through the system information. Herein, the system information may be an MIB, an SIB or another broadcast information, which is not limited in the embodiments of the present disclosure.

Taking the WiFi system as an example, the communication method provided by the embodiments of the present disclosure is described in detail below in conjunction with the logistics scenario.

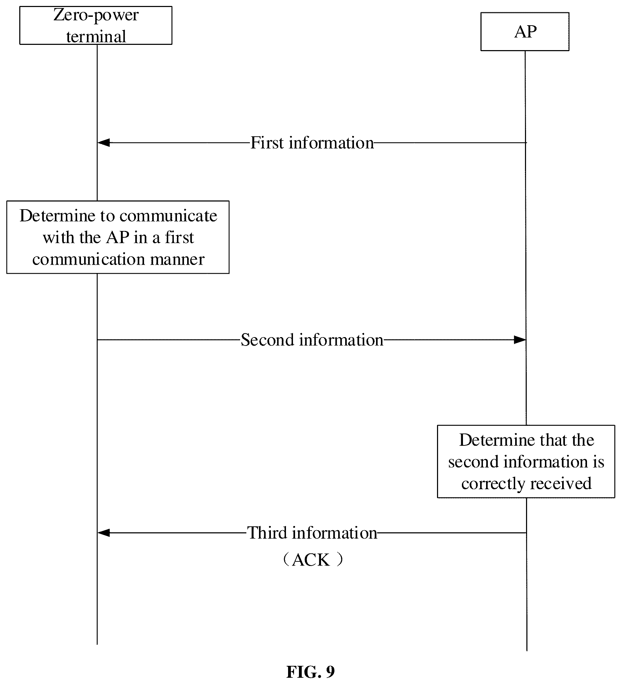

In the WiFi system, with reference to FIG. 9, the zero-power terminal and the AP may communicate with each other by the following operations.

At operation 1: the AP transmits first information to the zero-power terminal, or the zero-power terminal receives the first information from the AP.

In the logistics scenario, after goods enter a warehouse, the zero-power terminal carried by the goods may report goods-related data upon being triggered by the AP. During the goods transportation, the zero-power terminal carried by the goods may not report actively; thereby reducing the power consumption.

In an embodiment of the present disclosure, the AP may transmit the first information to the zero-power terminal, to trigger the zero-power terminal to report the data.

In some embodiments, the first information may be carried in a broadcast frame transmitted by the AP. The broadcast frame may be a management frame or a control frame, such as a beacon frame, a discovery frame, a trigger frame, or the like.

In some embodiments, the first information may indicate the zero-power terminal to communicate with the AP in a first communication manner. Here, the first communication manner is that the zero-power terminal directly communicates with the AP based on the received first information. The first communication manner may be understood as a simplified accessing manner, and the simplified accessing manner may not include the process of accessing the AP. That is, the simplified accessing manner does not include the procedures of scanning, authentication, association, four-way handshake communication, and the like.

In some embodiments, the first information may include first identification information, and the first identification information may be information related to the AP, such as a BSSID, that is, an ID of a BSS provided by the AP.

It is noted that the BSSID may be predefined, and a value of the BSSID is used to indicate that the zero-power terminal may communicate with the AP in the first communication manner, or used to identify that the zero-power terminal may communicate with the AP through a target access process. Exemplarily, the BSSID may be set to a Wildcard with the value of FF: FF: FF: FF: FF: FF.

In some embodiments, the first information may further include second identification information, and the second identification information may be used to identify the first node. For example, the second identification information may be an ID of the first node.

In some embodiments, the first information may further include third identification information, and the third identification information may identify a service type and/or a device type supported by the AP. The AP may support the terminal satisfying the device type and/or the service type to communicate with the first node in the first communication manner.

For example, for logistics data reporting or the zero-power terminal used for logistics, the reported data mainly includes the ID of the zero-power terminal or goods information. The requirements for confidentiality of the reported data are not high, but the requirements for latency and power consumption are relatively high; thus, such zero-power terminal may communicate with the AP in the first communication manner. In another example, for positioning data reporting or the zero-power terminal used for positioning, the reported data mainly includes location information of public areas, which is publicly available data. The requirements for confidentiality of the reported data are not high, but the requirements for latency and power consumption are also relatively high; thus, such zero-power terminal may also communicate with the AP in the first communication manner.

In some embodiments, the first information may further include a transmission parameter, and the transmission parameter may be used to configure the transmission parameter for communicating with the AP in first communication manner.

For example, the transmission parameter may include information such as: target time domain information, target frequency domain information, power information, a modulation mode, a coding mode, a data rate, and the like. Herein, the target time domain resource may be a time domain resource that is available for the zero-power terminal to perform uplink transmission and/or downlink transmission with the AP. For example, the target time domain resource may include slot information, time domain symbol information, and the like. The target frequency domain resource may be channel information, or a frequency domain location and bandwidth information in the channel that is available for the zero-power terminal to perform the uplink transmission and/or downlink transmission with the AP. In addition, the power information may include a transmission power for the zero-power terminal to perform the uplink transmission with the AP, and/or a reception power for the zero-power terminal to receive the downlink transmission from the AP. By using the aforementioned information of modulation mode, the coding mode, and the data rate, the zero-power terminal may set the manner of transmission modulation and coding for the communication with the AP.

In some embodiments, after acquiring the transmission parameter, the zero-power terminal may determine, based on the ID of the zero-power terminal, a time domain resource and/or a frequency domain resource for subsequent communication with the AP, so as to reduce collisions among transmissions from different zero-power terminals. Based on the power information, the zero-power terminal may set the power of transmission. Based on the modulation mode, the coding mode, and the data rate information, the zero-power terminal may set the manner of transmission modulation and coding.

In some embodiments, the AP may transmit the first information in the predefined first time domain resource and/or first frequency domain resource, to trigger data reporting by the zero-power terminal. Correspondingly, the zero-power terminal may receive the first information in the predefined first time domain resource and/or first frequency domain resource. In such way, the power consumption and latency caused by the scanning process of the zero-power terminal can be reduced.

Herein, the predefined first time domain resource may be a fixed time domain symbol position in each slot. The predefined first frequency domain resource may be a specific channel in a specific frequency band, such as a channel 1 in a 2.4 GHz frequency band, channels 40, 44, 149, 153 and the like in a 5 GHz frequency band, or may include a predefined channel in a frequency band below 1 GHz.

At operation 2: the zero-power terminal transmits second information to the AP, or the AP receives the second information from the zero-power terminal.

It should be understood that, in order to reduce the power consumption and latency of the zero-power terminal, the zero-power terminal may not perform the existing procedures of scanning, authentication, association and four-way handshake communication; and the zero-power terminal may directly transmit the second information to the AP based on the first information. Herein, the second information may include a data load of the zero-power terminal, such as an ID of the zero-power terminal, goods information stored in the zero-power terminal, positioning information, and the like. The goods information may include information such as goods identification.

In some embodiments, the second information may further include one or more of the following:
first identification information, used to identify that the first node supports the first communication manner;
second identification information, used to identify the first node;
third identification information, used to identify a device type and/or a service type supported by the first node;
fourth identification information, used to identify that the first terminal supports the first communication manner; and
fifth identification information, used to identify the first terminal.

Herein, the first identification information may identify that the first node supports the first communication manner. The second identification information may identify the first node, to indicate a receiving end of the second information. The third identification information may identify the device type and/or the service type supported by the first node, to indicate that the first terminal also supports the device type and/or service type.

It should be noted that the related descriptions of the first identification information, the second identification information, and the third identification information may refer to the above-described embodiments, and will not be elaborated herein again for the sake of brevity.

In a possible implementation, the fourth identification information may be the same as the first identification information in the first information that is received from the AP. The fourth identification information may identify a target receiving device of the second information, thereby indicating the zero-power terminal to transmit the second information to the AP in the first communication manner that is indicated by the first information; or the fourth identification information may identify that the second information is the information transmitted to the AP in the first communication manner.

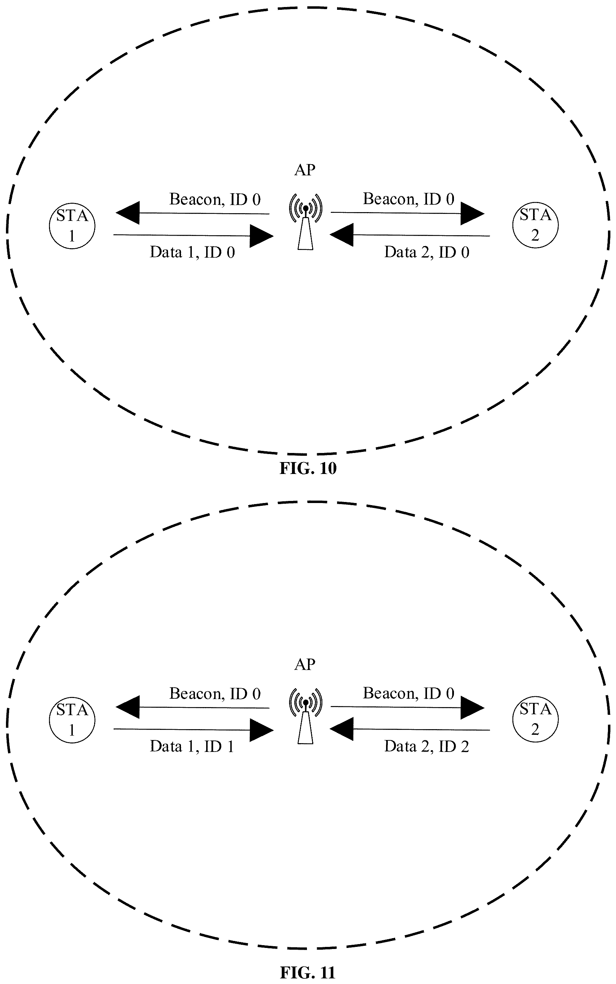

Exemplarily, with reference to FIG. 10, the AP may transmit a beacon frame that carries ID 0 information. After STA1 and STA2 detect the beacon frame, the STA1 and STA2 may determine to communicate with the AP in the first communication manner. The STA1 and STA2 may respectively carry data and ID 0 information in the transmitted data frames. After the AP receives the data frames, the AP may detect the ID 0, and determine that the STA1 and the STA2 transmit the second information in the first communication manner.

In another possible implementation, the fourth identification information may be different from the first identification information. The fourth identification information may be the ID of the zero-power terminal or the device type information of the zero-power terminal. The AP may determine that the received second information carrying the fourth identification information is the second information transmitted by the zero-power terminal in the first communication manner.

Exemplarily, with reference to FIG. 11, the AP may transmit a beacon frame that carries ID 0 information. After STA1 and STA2 detect the beacon frame, the STA1 and STA2 may determine to communicate with the AP in the first communication manner. The STA1 may carry data 1, ID 1 in the transmitted data frame, and the STA2 may carry data 2, ID 2 information in the transmitted data frame. After the AP receives the data frames, the AP may detect the ID 1 and ID 2, and determine that the STA1 and the STA2 transmit the second information in the first communication manner.

In some embodiments, based on the time domain resource and/or the frequency domain resource for receiving the first information, the zero-power terminal may determine the time domain resource and/or the frequency domain resource for transmitting the second information. Herein, the frequency domain resource for receiving the first information may have an association relationship with the frequency domain resource for transmitting the second information, for example, such frequency domain resources may located in the same frequency band, adjacent channels, or the like. The time domain resource for receiving the first information may also have an association relationship with the time domain resource for transmitting the second information, for example, such time domain resources may be separated by a certain time interval.

In some embodiments, based on the transmission parameter configured by the first information, the zero-power terminal may determine the time domain resource and/or the frequency domain resource for transmitting the second information. For example, after receiving the first information, the zero-power terminal may select, based on the ID of the zero-power terminal, a matched time domain resource and/or frequency domain resource from the target time domain resource and/or the target frequency domain resource configured by the transmission parameter, to acquire the time domain resource and/or the frequency domain resource for transmitting the second information. In such way, the collision caused by transmissions from different terminals can be reduced, and the data transmission efficiency can be improved.

Further, in order to expand the communication coverage range of the broadcast frame of the AP or improve the rate for the zero-power terminal to transmit the second information to the AP, the zero-power terminal (which is referred to as a zero-power terminal 1), after receiving the first information from the AP, may determine to directly transmit the second information to the AP based on the first information in the first communication manner. In such situation, the second information may be received by another zero-power terminal (which is referred to as a zero-power terminal 2). After receiving the second information from the zero-power terminal 1, the zero-power terminal 2 may determine, based on the information carried through the second information, that there is an AP nearby which can be communicated with in the first communication manner. The zero-power terminal 2 may directly transmit the data frame to the AP in the first communication manner.

Specifically, if the fourth identification information in the second information is the same as the first identification information in the first information, the zero-power terminal 2 may determine, based on the fourth identification information in the second information, to directly transmit the data frame to the AP in the first communication manner. If the fourth identification information is different from the first identification information, the zero-power terminal 1 may carry the first identification information in the second information. Further, the zero-power terminal 1 may also carry the transmission parameter of the AP in the second information, such as the transmitted target time domain resource, target frequency domain resource, power information, modulation mode, coding mode, and data rate mentioned above. In such situation, in addition to detecting the first message from the AP on a control channel, the zero-power terminal 2 may be further required to detect the second message transmitted by the zero-power terminal 1 on a service channel.

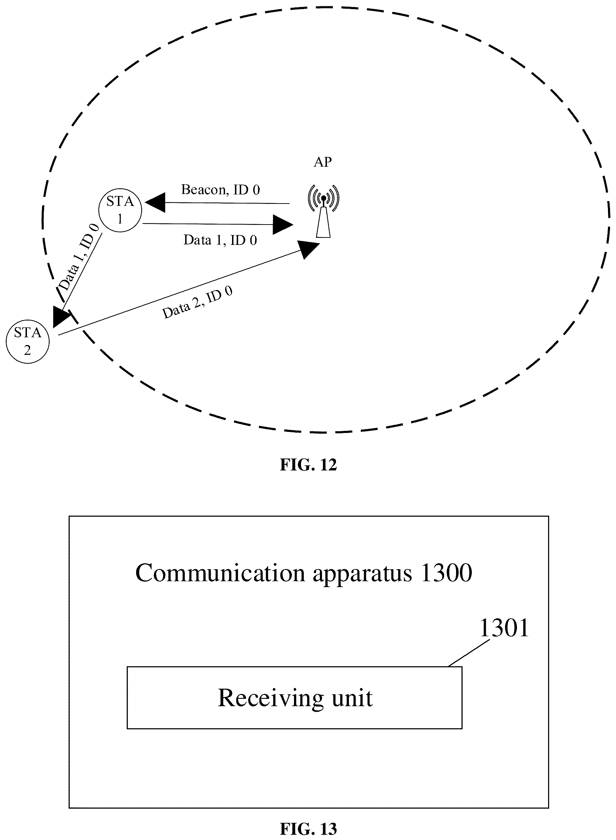

Exemplarily, with reference to FIG. 12, the STA 1 may receive the beacon frame from the AP and acquires the first identification ID 0; and then, the STA 1 may carry the ID 0 in the transmitted data frame in the first communication manner. The STA2, which is not located within the coverage range of the AP, may detect the ID 0 in the data frame transmitted by the STA1, carry data 2 and ID 0 in the data frame, and further transmit the data frame to the AP in the first communication manner.

At operation 3: after receiving the second information, the AP may feedback ACK information, to confirm that the data transmitted by the zero-power terminal is correctly received. Otherwise, if the zero-power terminal does not receive the ACK information, the zero-power terminal needs to continue attempting to transmit the second information.

Accordingly, since the zero-power terminal (especially for the ambient power based AMP device) has limited operating time, extremely low power consumption requirements, and low latency requirements in some application scenarios, such terminal may face many challenges for establishing the communication with the AP by using the existing access process. The simplified accessing process is provided in the embodiments of the present disclosure. The zero-power terminal does not need to perform the conventional procedures of scanning, authentication, association and four-way handshake. Instead, through the simplified accessing process, the zero-power terminal can realize the reporting of target information while reducing the power consumption and latency. The simplified accessing process is especially suitable for the communication process of the ambient power based AMP device in scenarios such as logistics and positioning.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical schemes of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no collision, various embodiments described in the present disclosure and/or the technical features in the various embodiments may be combined with the related art in any manner. The technical schemes acquired after the combination shall also fall within the scope of protection of the present disclosure.

It should be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

FIG. 13 is a schematic diagram of structural composition of a communication apparatus 1300 according to an embodiment of the present disclosure. The communication apparatus is applied to a terminal, and as illustrated in FIG. 13, the communication apparatus 1300 includes a receiving unit 1301.

The receiving unit 1301 is configured to receive first information, where the first information is used to indicate communicating with a first node in a first communication manner.

In some embodiments, the first communication manner may be for communicating with the first node based on the received first information.

In some embodiments, the first information may include one or more of the following:
first identification information, used to identify that the first node supports the first communication manner;
second identification information, used to identify the first node;
third identification information, used to identify a device type and/or a service type supported by the first node; and
a transmission parameter, used to configure the transmission parameter for communicating with the first node in first communication manner.

In some embodiments, the transmission parameter may include one or more of the following: a target time domain resource, a target frequency domain resource, power information, a modulation mode, a coding mode, and a data rate.

In some embodiments, the first terminal may receive the first information in a first time domain resource and/or a first frequency domain resource. The first time domain resource and/or the first frequency domain resource may be predefined.

In some embodiments, the first communication manner may not include accessing the first node.

In some embodiments, the first communication manner may be different from a second communication manner, and the second communication manner may include performing the communication with the first node after accessing the first node.

In some embodiments, the first node may support the first communication manner and the second communication manner.

In some embodiments, the accessing the first node may include one or more of the following: scanning a wireless network corresponding to the first node; performing identity authentication with the first node; establishing an association relationship with the first node; and performing four-way handshake communication with the first node.

In some embodiments, the communication apparatus 1300 may further include a transmission unit, and the transmission unit may be configured to communicate with the first node based on the first information.

In some embodiments, there may be a plurality pieces of first information. Herein, second identification information or third identification information carried in one of at least two pieces of first information may be different from the second identification information or the third identification information carried in another one of the at least two pieces of first information. The transmission unit may be further configured to communicate with the first nodes corresponding to the at least two pieces of first information based on the at least two pieces of first information.

In some embodiments, there may be a plurality pieces of first information. Herein, second identification information or third identification information carried in one of at least two pieces of first information of the plurality pieces of first information may be the same as the second identification information or the third identification information carried in another one of the at least two pieces of first information. The transmission unit may be further configured to communicate, based on target first information in the at least two pieces of first information, with a first node corresponding to the target first information, where the target first information has a signal strength greater than a first threshold.

In some embodiments, the transmission unit may be further configured to transmit second information to the first node based on the first information, where the second information includes a data load of the first terminal.

In some embodiments, the second information may further include one or more of the following:
fourth identification information, used to identify that the first terminal supports the first communication manner;
fifth identification information, used to identify the first terminal;
first identification information, used to identify that the first node supports the first communication manner;
second identification information, used to identify the first node; and
third identification information, used to identify a device type and/or a service type supported by the first node.

In some embodiments, the transmission unit may be further configured to transmit the second information in a second time domain resource and/or a second frequency domain resource. The second time domain resource and/or the second frequency domain resource may be determined based on one or more of the following:
a transmission parameter, where the transmission parameter is carried in the first information and used to configure the transmission parameter for communicating with the first node in the first communication manner; and
a first time domain resource and/or a first frequency domain resource for the first terminal to receive the first information.

In some embodiments, the transmission parameter may include a target time domain resource and/or a target frequency domain resource. The second time domain resource and/or the second frequency domain resource may be a time domain resource and/or a frequency domain resource corresponding to fifth identification information in the target time domain resource and/or the target frequency domain resource. The fifth identification information may be used to identify the first terminal.

In some embodiments, in case that the first information includes third identification information, the third identification information may be used to identify a device type and/or a service type supported by the first node. When a device type of the first terminal matches the device type supported by the first node and/or a service type supported by the first terminal matches the service type supported by the first node, the transmission unit may be further configured to transmit the second information to the first node.

In some embodiments, the receiving unit 1301 may be further configured to receive third information, where the third information is used to indicate that the first node correctly receives the second information.

In some embodiments, when the third information is not received by the first terminal within a target duration after the first terminal transmits the first information, the second information may be retransmitted until the third information is received or until the number of times the second information is transmitted reaches a target number.

In some embodiments, the first information may be from fourth information transmitted by the first node in a broadcast manner.

Alternatively, the first information may be from fifth information transmitted by a second terminal, and the fifth information may be transmitted by the second terminal based on the fourth information.

In some embodiments, the transmission unit may be further configured to transmit sixth information, in case that the first information is from the fourth information transmitted by the first node in the broadcast manner. The sixth information may include at least portion of the first information.

In some embodiments, the first terminal may be one or more of the following: a zero-power terminal, a low-power terminal, a low-cost terminal, and a low-capability terminal.

It should be understood by those skilled in the art that the relevant description of the above communication apparatuses in the embodiments of the present disclosure may be understood with reference to the relevant description of the communication methods in the embodiments of the present disclosure.

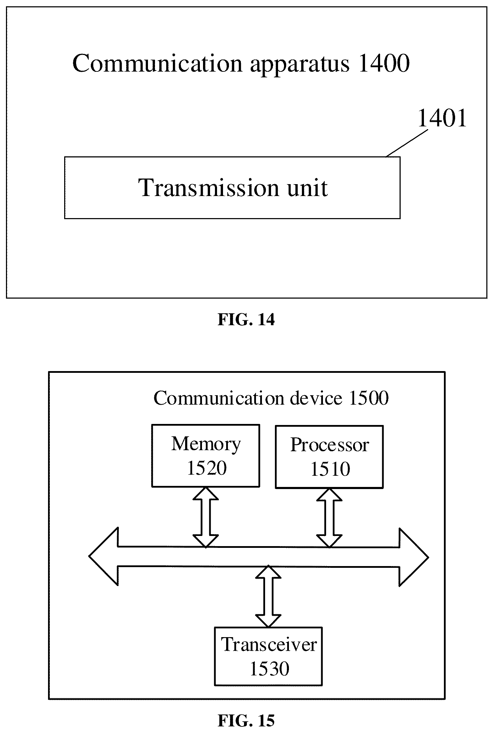

FIG. 14 is a schematic diagram of structural composition of a communication apparatus 1400 according to an embodiment of the present disclosure. The communication apparatus is applied to a first node, and as illustrated in FIG. 14, the communication apparatus includes a transmission unit 1401.

The transmission unit 1401 is configured to transmit first information, where the first information is used to indicate communicating with the first node in a first communication manner.

In some embodiments, the first communication manner may be for communicating with the first node based on the received first information.

In some embodiments, the first information may include one or more of the following:
first identification information, used to identify that the first node supports the first communication manner;
second identification information, used to identify the first node;
third identification information, used to identify a device type and/or a service type supported by the first node; and
a transmission parameter, used to configure the transmission parameter for communicating with the first node in first communication manner.

In some embodiments, the transmission parameter may include one or more of the following: a target time domain resource, a target frequency domain resource, power information, a modulation mode, a coding mode, and a data rate.

In some embodiments, the first node may transmit the first information in a first time domain resource and/or a first frequency domain resource. The first time domain resource and/or the first frequency domain resource may be predefined.

In some embodiments, the first communication manner may not include accessing the first node.

In some embodiments, the first communication manner may be different from a second communication manner, and the second communication manner may include performing the communication with the first node after accessing the first node.

In some embodiments, the first node may support the first communication manner and the second communication manner.

In some embodiments, the accessing the first node may include one or more of the following: scanning a wireless network corresponding to the first node; performing identity authentication with the first node; establishing an association relationship with the first node; and performing four-way handshake communication with the first node.

In some embodiments, the communication apparatus 140 may further include a receiving unit, and the receiving unit may be configured to receive second information from a first terminal, where the second information includes a data load of the first terminal.

In some embodiments, the second information may further include one or more of the following:
fourth identification information, used to identify that the first terminal supports the first communication manner;
fifth identification information, used to identify the first terminal;
first identification information, used to identify that the first node supports the first communication manner;
second identification information, used to identify the first node; and
third identification information, used to identify a device type and/or a service type supported by the first node.

In some embodiments, the receiving unit may be further configured to receive the second information in a second time domain resource and/or a second frequency domain resource. The second time domain resource and/or the second frequency domain resource may be determined based on one or more of the following:
a transmission parameter, where the transmission parameter is carried in the first information and used to configure the transmission parameter for communicating with the first node in the first communication manner; and
a first time domain resource and/or a first frequency domain resource for the first node to transmit the first information.

In some embodiments, the transmission parameter may include a target time domain resource and/or a target frequency domain resource. The second time domain resource and/or the second frequency domain resource may be a time domain resource and/or a frequency domain resource corresponding to fifth identification information in the target time domain resource and/or the target frequency domain resource. The fifth identification information may be used to identify the first terminal.

In some embodiments, the transmission unit 1401 may be further configured to transmit third information to the first terminal, where the third information is used to indicate that the first node correctly receives the second information.

In some embodiments, the transmission unit 1401 may be further configured to transmit fourth information in a broadcast manner, where the fourth information includes the first information.

It should be understood by those skilled in the art that the relevant description of the aforementioned communication apparatuses in the embodiments of the present disclosure may be understood with reference to the relevant description of the communication methods in the embodiments of the present disclosure.

FIG. 15 is a schematic structural diagram of a communication device 1500 according to an embodiment of the present disclosure. The communication device may be the first terminal or the first node in the above embodiments. The communication device 1500 illustrated in FIG. 15 includes a processor 1510. The processor 1510 may be configured to call and run a computer program stored in a memory to perform each of the methods according to the embodiments of the present disclosure.

Optionally, as illustrated in FIG. 15, the communication device 1500 may further include a memory 1520. Herein, the processor 1510 may be configured to call and run the computer program stored in the memory 1520 to perform each of the methods according to the embodiments of the present disclosure.

Herein, the memory 1520 may be a separate device independent of the processor 1510, or may be integrated into the processor 1510.

Optionally, as illustrated in FIG. 15, the communication device 1500 may further include a transceiver 1530. The processor 1510 may control the transceiver 1530 to communicate with other devices. Specifically, the transceiver 1530 may transmit information or data to other devices, or receive information or data from other devices.

Herein, the transceiver 1530 may include a transmitter and a receiver. The transceiver 1530 may further include one or more antennas.

Optionally, the communication device 1500 may specifically be the first node in embodiments of the present disclosure. The communication device 1500 may implement the corresponding processes that are implemented by the first node in each of the methods in the embodiments of the present disclosure. For brevity, details are not elaborated herein again.

Optionally, the communication device 1500 may specifically be the first terminal in the embodiments of the present disclosure. The communication device 1500 may implement corresponding processes that are implemented by the first terminal in each of the methods in the embodiments of the present disclosure. For brevity, details are not elaborated herein again.

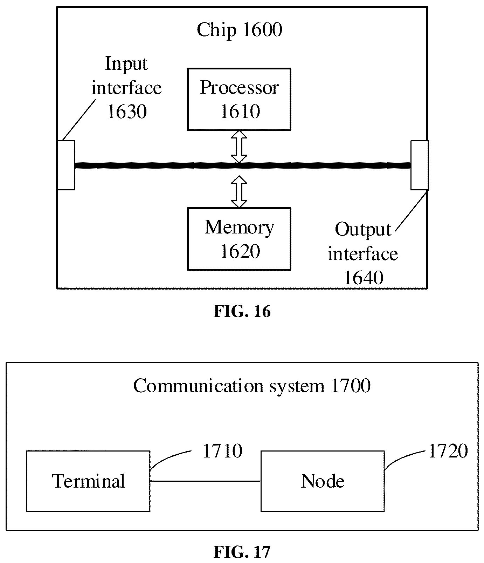

FIG. 16 is a schematic structural diagram of a chip according to an embodiment of the present disclosure. The chip 1600 illustrated in FIG. 16 includes a processor 1610. The processor 1610 may be configured to call and run a computer program stored in a memory to perform each of the methods according to the embodiments of the present disclosure.

Optionally, as illustrated in FIG. 16, the chip 1600 may further include a memory 1620. Herein, the processor 1610 may be configured to call and run the computer program stored in the memory 1620 to perform each of the methods according to the embodiments of the present disclosure.

Herein, the memory 1620 may be a separate device independent of the processor 1610, or may be integrated into the processor 1610.

Optionally, the chip 1600 may further include an input interface 1630. The processor 1610 may control the input interface 1630 to communicate with other devices or chips. Specifically, the input interface 1630 may acquire information or data from other devices or chips.

Optionally, the chip 1600 may further include an output interface 1640. The processor 1610 may control the output interface 1640 to communicate with other devices or chips. Specifically, the output interface 1640 may output information or data to other devices or chips.

Optionally, the chip may be applied to the first node in the embodiments of the present disclosure. The chip may implement the corresponding processes implemented by the first node in each of the methods of the embodiments of the present disclosure. For brevity, details are not elaborated herein again.

Optionally, the chip may be applied to the first terminal in the embodiments of the present disclosure. The chip may implement the corresponding processes implemented by the first terminal in each of the methods of the embodiments of the present disclosure. For brevity, details are not elaborated herein again.

It should be understood that the chip mentioned in the embodiments of the present disclosure may also be referred to as a system-level chip, a system chip, a chip system or a system-on-chip, etc.

FIG. 17 is a schematic block diagram of a communication system 1700 according to an embodiment of the present disclosure. As illustrated in FIG. 17, the communication system 1700 includes a terminal 1710 and a node 1720.

The terminal 1710 may be configured to perform corresponding functions that are performed by the first terminal in each of the above methods. The node 1720 may be configured to perform corresponding functions that are performed by the first node of each of the above methods. For brevity, details will not be elaborated herein again.

It should be understood that the processor in the embodiments of the present disclosure may be an integrated circuit chip having a signal processing capability. During implementation, various operations in the foregoing method embodiments may be implemented by using an integrated logic circuit in a hardware form in the processor or implemented by using instructions in a software form. The foregoing processor may be a general purpose processor, a digital signal processor (DSP), an application-specific integrated circuit (ASIC), a field programmable gate array (FPGA), or another programmable logical device, discrete gate or transistor logical device, or discrete hardware component. The processor may be configured to implement or perform methods, operations and logical blocks disclosed in the embodiments of the present disclosure. The general-purpose processor may be a microprocessor, or the processor may be any conventional processor and the like. Operations of the methods disclosed with reference to the embodiments of the present disclosure may be directly embodied to be executed and completed by means of a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register or the like. The storage medium is located in the memory, and the processor reads information in the memory and completes the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory in the system and methods described herein is intended to include but not be limited to memories of these and any other suitable types.

It should be understood that the foregoing memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. It should be noted that, the memory in the embodiments of the present disclosure is intended to include but not be limited to memories of these and any other suitable types.

An embodiment of the present disclosure further provides a computer-readable storage medium configured to store a computer program.

Optionally, the computer-readable storage medium may be applied to the first node in the embodiments of the present disclosure, and the computer program, when running on a computer, causes the computer to perform the corresponding processes performed by the first node in each of the methods in the embodiments of the present disclosure. For brevity, details are not elaborated herein again.

Optionally, the computer-readable storage medium may be applied to the first terminal in the embodiments of the present disclosure, and the computer program, when running by a computer, causes the computer to perform the corresponding processes performed by the first terminal in each of methods in the embodiments of the present disclosure. For brevity, details are not elaborated herein again.

An embodiment of the present disclosure further provides a computer program product, which includes computer program instructions.

Optionally, the computer program product may be applied to the first node in the embodiments of the present disclosure, and the computer program instructions, when running on a computer, cause the computer to perform the corresponding processes performed by the first node in each of the methods in the embodiments of the present disclosure. For brevity, details are not elaborated herein again.

Optionally, the computer program product may be applied to the first terminal in the embodiments of the present disclosure, and the computer program instructions, when running on a computer, cause the computer to perform the corresponding processes performed by the first terminal in each of the methods in the embodiments of the present disclosure. For brevity, details are not elaborated herein again.

An embodiment of the present disclosure further provides a computer program.

Optionally, the computer program may be applied to the first node in the embodiments of the present disclosure, and the computer program, when running on a computer, causes the computer to perform the corresponding processes performed by the first node in each of the methods in the embodiments of the present disclosure. For brevity, details are not elaborated herein again.

Optionally, the computer program may be applied to the first terminal in the embodiments of the present disclosure, and the computer program, when running on a computer, causes the computer to perform the corresponding processes performed by the first terminal in each of the methods of the embodiments of the present disclosure. For brevity, details are not elaborated herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical schemes. Professionals may implement the described functions for each specific application by using different methods, but such implementations shall not be regarded as outside the scope of the present disclosure.

It may be clearly understood by those skilled in the art that, for the specific working processes of the systems, apparatuses and units described above, reference may be made to the corresponding processes in the aforementioned method embodiments, and such specific working processes of the systems, devices and units are not described herein again for the purpose of convenient and brief description.

In some embodiments provided in the present disclosure, it should be understood that the disclosed systems, apparatuses and methods may be implemented in other manners. For example, the apparatus embodiments described above are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the schemes of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical schemes of the present disclosure or a part of the technical schemes that contributes to the related art or a part of the technical schemes can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A communication method, comprising:
receiving, by a first terminal, first information, the first information being used to indicate communicating with a first node in a first communication manner.

2. The method of claim 1, wherein the first communication manner is for communicating with the first node based on the received first information.

3. The method of claim 1 or 2, wherein the first information comprises one or more of the following:
first identification information, used to identify that the first node supports the first communication manner;
second identification information, used to identify the first node;
third identification information, used to identify a device type and/or a service type supported by the first node; and
a transmission parameter, used to configure the transmission parameter for communicating with the first node in the first communication manner.

4. The method of claim 3, wherein the transmission parameter comprises one or more of the following:
a target time domain resource, a target frequency domain resource, power information, a modulation mode, a coding mode, and a data rate.

5. The method of any one of claims 1 to 4, wherein the first terminal receives the first information in a first time domain resource and/or a first frequency domain resource, and the first time domain resource and/or the first frequency domain resource are predefined.

6. The method of any one of claims 1 to 5, wherein the first communication manner does not comprise accessing the first node.

7. The method of any one of claims 1 to 6, wherein the first communication manner is different from a second communication manner, and the second communication manner comprises communicating with the first node after accessing the first node.

8. The method of claim 7, wherein the first node supports the first communication manner and the second communication manner.

9. The method of any one of claims 6 to 8, wherein accessing the first node comprises one or more of the following:
scanning a wireless network corresponding to the first node; performing identity authentication with the first node; establishing an association relationship with the first node; and performing four-way handshake communication with the first node.

10. The method of any one of claims 1 to 9, further comprising:
communicating, by the first terminal, with the first node based on the first information.

11. The method of any one of claims 1 to 10, wherein there are a plurality pieces of first information, and second identification information or third identification information carried in one of at least two pieces of first information is different from the second identification information or the third identification information carried in another one of the at least two pieces of first information; and the method further comprises:
communicating, by the first terminal based on the at least two pieces of first information, with first nodes corresponding to the at least two pieces of first information, respectively.

12. The method of any one of claims 1 to 11, wherein there are a plurality pieces of first information, and second identification information or third identification information carried in one of at least two of the plurality pieces of first information is the same as the second identification information or the third identification information carried in another one of the at least two of the plurality pieces of first information; and the method further comprises:
communicating, by the first terminal based on target first information in the at least two pieces of first information, with the first node corresponding to the target first information, the target first information having a signal strength greater than a first threshold.

13. The method of any one of claims 10 to 12, wherein communicating with the first node based on the first information comprises:
transmitting second information to the first node based on the first information, the second information comprising a data load of the first terminal.

14. The method of claim 13, wherein the second information further comprises one or more of the following:
fourth identification information, used to identify that the first terminal supports the first communication manner;
fifth identification information, used to identify the first terminal;
first identification information, used to identify that the first node supports the first communication manner;
second identification information, used to identify the first node; and
third identification information, used to identify a device type and/or a service type supported by the first node.

15. The method of claim 13 or 14, further comprising:
transmitting, by the first terminal, the second information in a second time domain resource and/or a second frequency domain resource, the second time domain resource and/or the second frequency domain resource being determined based on one or more of the following:
a transmission parameter, the transmission parameter being carried in the first information and used to configure the transmission parameter for communicating with the first node in the first communication manner; and
a first time domain resource and/or a first frequency domain resource for the first terminal to receive the first information.

16. The method of claim 15, wherein the transmission parameter comprises a target time domain resource and/or a target frequency domain resource; and the second time domain resource and/or the second frequency domain resource being determined based on the transmission parameter comprises:
the second time domain resource and/or the second frequency domain resource being a time domain resource and/or a frequency domain resource corresponding to fifth identification information in the target time domain resource and/or the target frequency domain resource, and the fifth identification information being used to identify the first terminal.

17. The method of any one of claims 13 to 16, wherein in case that the first information comprises third identification information, the third identification information is used to identify a device type and/or a service type supported by the first node; and transmitting, by the first terminal, the second information to the first node comprises:
when a device type of the first terminal matches the device type supported by the first node, and/or a service type supported by the first terminal matches the service type supported by the first node, transmitting, by the first terminal, the second information to the first node.

18. The method of any one of claims 13 to 17, further comprising:
receiving, by the first terminal, third information, the third information being used to indicate that the first node correctly receives the second information.

19. The method of claim 18, further comprising:
retransmitting the second information until the third information is received or until a number of times the second information is transmitted reaches a target number, when the third information is not received by the first terminal within a target duration after the first terminal transmits the second information.

20. The method of any one of claims 1 to 19, wherein
the first information is from fourth information transmitted by the first node in a broadcast manner; or
the first information is from fifth information transmitted by a second terminal, wherein the fifth information is transmitted by the second terminal based on the fourth information.

21. The method of claim 20, wherein
in case that the first information is from the fourth information transmitted by the first node in the broadcast manner, transmitting, by the first terminal, sixth information, wherein the sixth information comprises at least portion of the first information.

22. The method of any one of claims 1 to 21, wherein the first terminal is one or more of the following: a zero-power terminal, a low-power terminal, a low-cost terminal, and a low-capability terminal.

23. A communication method, comprising:
transmitting, by a first node, first information, the first information being used to indicate communicating with the first node in the first communication manner.

24. The method of claim 23, wherein the first communication manner is for communicating with the first node based on the received first information.

25. The method of claim 23 or 24, wherein the first information comprises one or more of the following:
first identification information, used to identify that the first node supports the first communication manner;
second identification information, used to identify the first node;
third identification information, used to identify a device type and/or a service type supported by the first node; and
a transmission parameter, used to configure the transmission parameter for communicating with the first node in first communication manner.

26. The method of claim 25, wherein the transmission parameter comprises one or more of the following:
a target time domain resource, a target frequency domain resource, power information, a modulation mode, a coding mode, and a data rate.

27. The method of any one of claims 23 to 26, wherein the first node transmits the first information in a first time domain resource and/or a first frequency domain resource, and the first time domain resource and/or the first frequency domain resource are predefined.

28. The method of any one of claims 23 to 27, wherein the first communication manner does not comprise accessing the first node.

29. The method of any one of claims 23 to 28, wherein the first communication manner is different from a second communication manner, and the second communication manner comprises communicating with the first node after accessing the first node.

30. The method of claim 29, wherein the first node supports the first communication manner and the second communication manner.

31. The method of any one of claims 28 to 30, wherein accessing the first node comprises one or more of the following:
scanning a wireless network corresponding to the first node; performing identity authentication with the first node; establishing an association relationship with the first node; and performing four-way handshake communication with the first node.

32. The method of any one of claims 23 to 31, further comprising:
receiving, by the first node, second information from a first terminal, the second information comprising a data load of the first terminal.

33. The method of claim 32, wherein the second information further comprises one or more of the following:
fourth identification information, used to identify that the first terminal supports the first communication manner;
fifth identification information, used to identify the first terminal;
first identification information, used to identify that the first node supports the first communication manner;
second identification information, used to identify the first node;
third identification information, used to identify a device type and/or a service type supported by the first node.

34. The method of claim 32 or 33, further comprising:
receiving, by the first node, the second information in a second time domain resource and/or a second frequency domain resource, the second time domain resource and/or the second frequency domain resource being determined based on one or more of the following:
a transmission parameter, the transmission parameter being carried in the first information and used to configure the transmission parameter for communicating with the first node in the first communication manner; and
a first time domain resource and/or a first frequency domain resource for the first node to transmit the first information.

35. The method of claim 34, wherein the transmission parameter comprises a target time domain resource and/or a target frequency domain resource, the second time domain resource and/or the second frequency domain resource are a time domain resource and/or a frequency domain resource corresponding to fifth identification information in the target time domain resource and/or the target frequency domain resource, and the fifth identification information is used to identify the first terminal.

36. The method of any one of claims 32 to 35, further comprising:
transmitting, by the first node, third information to the first terminal, the third information being used to indicate that the first node correctly receives the second information.

37. The method of any one of claims 23 to 36, wherein transmitting, by the first node, the first information comprises:
transmitting, by the first node, fourth information in a broadcast manner, the fourth information comprising the first information.

38. A communication apparatus, applied to a first terminal, the apparatus comprising:
a receiving unit, configured to receive first information, the first information being used to indicate communicating with a first node in a first communication manner.

39. A communication apparatus, applied to a first node, the apparatus comprising:
a transmission unit, configured to transmit first information, the first information being used to indicate communicating with the first node in a first communication manner.

40. A terminal, comprising:
a memory, configured to store computer executable instructions; and
a processor, coupled to the memory and configured to implement the method of any one of claims 1 to 22 by executing the computer-executable instructions.

41. A network node, including:
a memory, configured to store computer executable instructions; and
a processor, coupled to the memory and configured to implement the method of any one of claims 23 to 37 by executing the computer-executable instructions.

42. A chip, comprising:
a processor, configured to call a computer program from a memory and run the computer program to cause a device installed with the chip to perform the method of any one of claims 1 to 22, or to perform the method of any one of claims 23 to 37.

43. A computer-readable storage medium, having stored thereon a computer program which, when being executed by at least one processor, causes the at least one processor to perform the method according to any one of claims 1 to 22 or to perform the method according to any one of claims 23 to 37.

44. A computer program product, comprising a computer storage medium storing a computer program, wherein the computer program comprises instructions executable by at least one processor that, when executing the instructions, performs the method of any one of claims 1 to 22 or performs the method of any one of claims 23 to 37.

45. A computer program, wherein the computer program is run by a computer to perform the method of any one of claims 1 to 22, or to perform the method of any one of claims 23 to 37.
